# EUROPEAN PATENT APPLICATION

(11) **EP 2 326 102 A1**
(43) Date of publication of application: **25.05.2011**
(21) Application number: 09814249.0
(22) Date of filing: 10.09.2009
(51) Int. Cl.: H04N 13/04, G02B 27/22

(54) **REPRODUCTION DEVICE, REPRODUCTION METHOD, AND REPRODUCTION PROGRAM FOR STEREOSCOPICALLY REPRODUCING VIDEO CONTENT**

(30) Priority: 18.09.2008 JP 2008239387; 04.11.2008 US 111028 P
(71) Applicant: Panasonic Corporation, Kadoma-shi Osaka 571-8501 (JP)
(72) Inventor: KANAMARU, Tomokazu, Osaka-shi, Osaka 540-6207 (JP); NAKAMURA, Tomonori, Osaka-shi, Osaka 540-6207 (JP); LEICHSENRING, Germano, Osaka-shi, Osaka 540-6207 (JP)
(74) Representative: Grünecker, Kinkeldey, Stockmair & Schwanhäusser Anwaltssozietät
(86) International application number: PCT/JP2009/004489
(87) International publication number: WO 2010/032403

(57) **Abstract**

To provide a playback apparatus capable of reducing a viewer's uncomfortable feeling caused due to plane shift to realize stereoscopic viewing. A playback apparatus 200 that performs stereoscopic playback by alternately performing playback for left view and playback for fight view comprises: a plane memory 6c that stores therein image data composed of a predetermined number of horizontal pixel data pieces and a predetermined number of vertical pixel data pieces; a shift engine 9b operable to, during the playback for the left view, perform shift processing for a left eye on the image data stored in the plane memory to obtain an image for the left eye that is shifted in one of a left direction and a right direction, and during the playback for the right view, perform shift processing for a right eye on the image data stored in the plane memory to obtain an image for the right eye that is shifted in a direction opposite to the one direction; and a rendering engine 22b operable to, for each of the images for the left eye and the right eye, perform rendering processing of rendering a substitute image part on a rectangle region at an end portion of the image, the substitute image part being generated using substitute non-transparent pixel data pieces, the end portion being in a direction opposite to the direction in which the image has been shifted.

## Description

### [Technical Field]

The present invention relates to an art of playing back stereoscopic video contents, especially stereoscopic background (still) images.

### [Background Art]

In recent years, Blu-ray Discs (hereinafter "BDs") that are the standards for a new-generation optical disc have been becoming increasingly common. A playback apparatus compliant with the BD-ROM standards composites a high-resolution video stream with a subtitle and graphics, and outputs the composited data to a display apparatus connected to the playback apparatus such as a display. This enables a viewer to enjoy a video with enhanced realism (see Patent Document 1, for example).

Meanwhile, stereoscopic displays, which enable users to enjoy not only planar video images but also stereoscopic video images, are gradually becoming common. Although there are various methods applicable to stereoscopic displays, such displays basically use a mechanism for separately showing images for the left eye and images for the right eye which are different from each other, and virtually generate stereoscopic videos by using the parallax.

In order to allow a viewer to view the stereoscopic video at the same frame rate as normal planar video, response performance twice as high as response performance needed for the normal planar video is necessary. This means, for example, that it is necessary to switch among at least 120 frames per second in order to display video consisting of 60 frames per second.

Accordingly, the video stream to be displayed needs to be encoded at 120 frames per second. A stereoscopic effect may be obtained without increasing the frame rate, by using a side-by-side method as disclosed in a Non Patent Document 1.

Any method is based on the assumption that video streams, subtitles, and graphics are prepared respectively for the left view and the right view for realizing stereoscopic effect. Also, background (still) images need to be prepared respectively for the left view and the right view for realizing stereoscopic effect.

### [Citation List]

### [Patent Literature]

[Patent Literature 1] WO2005-II9675

### [Non Patent Literature]

[Non Patent Literature 1 FOUNDATIONS OF THE STEREOSCOPIC CINEMA A STUDY IN DEPTH (by LENNY LIPTON)

### [Summary of Invention]

### [Technical Problem]

By the way, it is desirable that data for both a left view (left-view data) and data for a right view (right-view data) are prepared for each of the pieces of the video streams and so on. However, since BD-ROMs have limited capacity, it is difficult to prepare both the left-view data and the right-view data for each of the pieces. Especially, a background image has a lower level of importance in video contents than a video stream, and creators of video contents desire to easily realize stereoscopic viewing of such a background image without effort.

In view of this, it has been proposed that a playback apparatus generates a background image for left view (hereinafter, "L image") and a background image for right view (hereinafter, "R image") based on one background image, instead of preparing a background image for each of the left view and the right view. Specifically, a background plane included in the playback apparatus stores therein background data composed of a predetermined number of horizontal pixel data pieces and a predetermined number of vertical pixel data pieces. During playback for the left view, a shift engine included in the playback apparatus shifts coordinates of each of the pixel data pieces of the background data in one of a left direction and a right direction, and during the playback for the right view, the shift engine shifts the coordinates of each of the pixel data pieces of the background data in a direction opposite to the one direction. As a result, an L image and an R image are obtained. Hereinafter, processing of shifting the coordinates of each of the pixel data pieces of the background image is referred to as "plane shift". Here, by adjusting a shift amount of the plane shift, it is possible to determine an amount indicating how much stereoscopic effect an object rendered on the plane being displayed has (hereinafter, "amount Z").

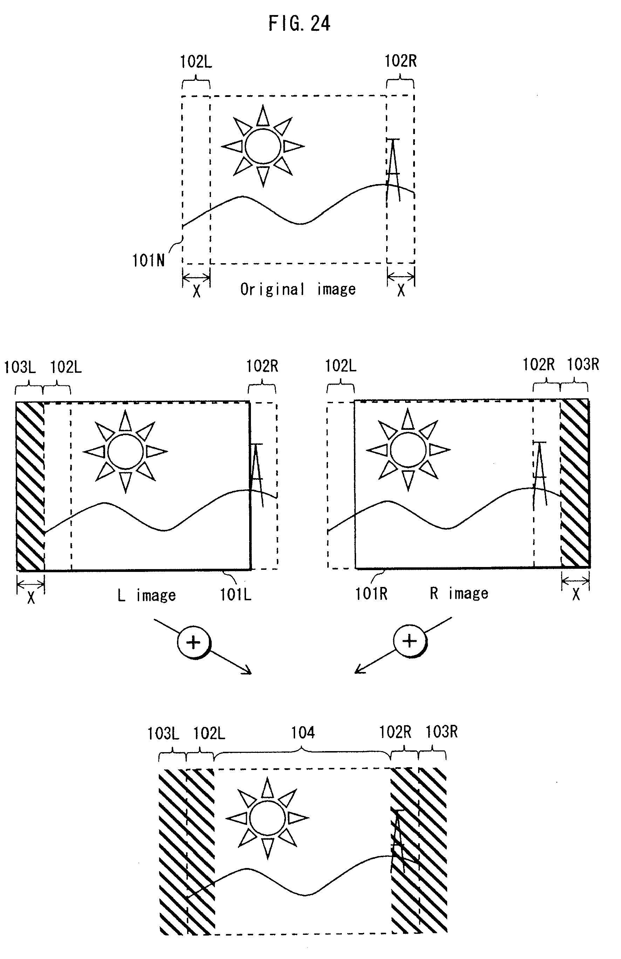

FIG. 24 shows an example of plane shift in the background plane. The upper stage in FIG. 24 shows a background image (original image) 101 N. Regions 102L and 102R included in the background image 101N are each a region composed of the number of horizontal pixels that is equal to x and the number of vertical pixels that is equal to the predetermined number of vertical pixels.

In FIG. 24, an L image is shown at the left side of the middle stage, and an R image is shown at the right side of the middle stage. Here, suppose that plane shift is performed on an L image in the right direction and an R image in the left direction by x pixels, respectively. When the L image is generated, coordinates of each of pixel data pieces are shifted in the right direction by x pixels by performing plane shift. As a result, a no-pixel region 103L having no pixel data that corresponds to a shift amount is generated in a rectangle region at an end portion on the left side of the L image.

Similarly, when the R image is generated, coordinates of each of the pixel data pieces are shifted in the left direction by x pixels by performing plane shift. As a result, a no-pixel region 103R having no pixel data that corresponds to a shift amount is generated in a rectangle region at an end portion on the right side of the R image.

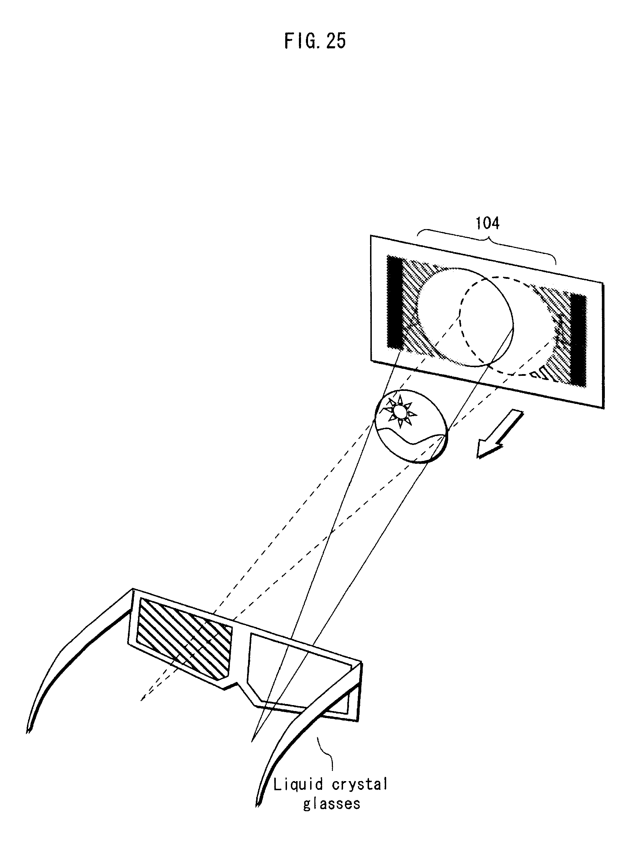

If a viewer views the L image and the R image respectively allocated to his left eye and right eye through liquid crystal glasses, the viewer can view a common rendering region 104 (shown at the lower stage in FIG. 24) in which common rendering is performed between the L image and the R image, with the stereoscopic effect having the amount Z that is proportional to the shift amount of the plane shift, as shown in FIG. 25.

However, in order to realize stereoscopic viewing of the background image using the L image and the R image generated as described above, there is a case where a viewer has an uncomfortable feeling. This uncomfortable feeling is specifically described.

The playback apparatus generally includes a video plane, a graphics plane, a subtitle plane, and a background plane that each have a different layer structure. Data respectively stored in the background plane, the video plane, the subtitle plane, and the graphics plane are composited (overlaid) surely in this order from the bottom. As a result, a video and a background image are below a subtitle and graphics. Accordingly, even if a no-pixel region is generated in the subtitle plane or the graphics plane, rendering is performed, upon composition, on a region corresponding to the no-pixel region based on pixel data of the video and the background image in a layer below a layer of the subtitle plane or the graphics plane.

However, in a case where only the background image is displayed, for example, in a case where playback of a video is stopped, there is no data below the background image. Accordingly, upon composition, it is impossible to perform rendering on a region corresponding to a no-pixel region of the background plane based on pixel data stored in another plane. In such a case, some data is written into the no-pixel region based on a default setting, and a creator of video content cannot ensure a type of pixel data to be written into the no-pixel region. For example, if it is assumed that the playback apparatus fills the no-pixel region with a black color, the no-pixel regions 103L and 103R in the background plane are displayed as black stripes on the both sides on the screen (see FIG. 25).

In this way, when stereoscopic viewing is realized by performing plane shift, a creator of video content cannot ensure a type of pixel data to be written into the no-pixel region. This might cause a viewer to have an uncomfortable feeling.

Although there has been described the case where stereoscopic viewing of a background image is realized by performing plane shift, there is a case where stereoscopic viewing of a subtitle and graphics realized by performing plane shift might cause a viewer to have an uncomfortable feeling due to the plane shift. As described above, even if a no-pixel region is generated in the subtitle plane or the graphics plane, upon composition, rendering is performed on a region corresponding to the no-pixel region based on pixel data of a video or a background image below a layer of the no-pixel region. As a result, one of the L image and the R image includes a region on which graphics (or a subtitle) is to be rendered, and the other one of the L image and the R image includes a region on which a video or a background image is to be rendered. In this way, if there is a region on which rendering that has no correspondence between the L image and the R image is performed, and if a viewer views the L image and the R image through liquid crystal glasses, these images are viewed as if they are located on the same space. As a result, the visual inconsistency occurs between the left eye and the right eye. This might cause the viewer to have an uncomfortable feeling in the same way as the case where plane shift of the background plane is performed.

The present invention aims to provide a playback apparatus capable of reducing a user's discomfortable feeling due to stereoscopic viewing by performing plane shift.

### [Solution Problem]

In order to achieve the above aims, a playback apparatus that is one aspect of the present invention provides a playback apparatus for performing stereoscopic playback by alternately performing playback for left view and playback for right view, the playback apparatus comprising: a plane memory that stores therein image data composed of a predetermined number of horizontal pixel data pieces and a predetermined number of vertical pixel data pieces; a shift engine operable to, during the playback for the left view, perform shift processing for a left eye on the image data stored in the plane memory to obtain an image for the left eye that is shifted in one of a left direction and a right direction, and during the playback for the right view, perform shift processing for a right eye on the image data stored in the plane memory to obtain an image for the right eye that is shifted in a direction opposite to the one direction; and a rendering engine operable to, for each of the images for the left eye and the right eye, perform rendering processing of rendering a substitute image part on a rectangle region at an end portion of the image, the substitute image part being generated using substitute non-transparent pixel data pieces, the end portion being in a direction opposite to the direction in which the image has been shifted.

### [Advantageous Effects of Invention]

With the structure described in the above "MEANS TO SOLVE THE PROBLEMS", when an image for a left eye and an image for a right eye are obtained, it is possible to, for each of the images for the left eye and the right eye, render a substitute image part generated using substitute non-transparent pixel data pieces, on a rectangle region at an end portion of the image that is in a direction opposite to the direction in which the image has been shifted. By rendering an image that is unlikely to cause a viewer to have an uncomfortable feeling on the rectangle region as the substitute image part, it is possible to reduce the viewer's uncomfortable feeling.

### [Brief Description of Drawings]

FIG. 1 shows the structure of a home theater system;
FIG. 2 shows the internal structure of a BD-ROM;
FIG. 3 shows the internal structure of a playback apparatus;
FIG. 4 shows the internal structure of a background plane;
FIG. 5 shows how a depth of a background changes depending on the difference between plus and minus of a plane offset;
FIG. 6 is a flow chart showing playback processing of a 3D stream;
FIG. 7 is a flow chart continuing from the playback processing shown in FIG. 6;
FIG. 8 is a flow chart showing blank rendering processing;
FIG. 9 shows a specific embodiment according to a first embodiment;
FIG. 10 shows pixel data stored in a background plane;
FIG. 11 shows data stored in the background plane after the plane shift has been performed;
FIG. 12 shows data stored in the background plane after the blank rendering processing has been performed;
FIG. 13 shows a specific example according to a modification example 1-I;
FIG. 14 shows a specific example according to a modification example 1-2;
FIG. 15 is a flow chart showing blank rendering processing according to a second embodiment;
FIG. 16 shows a specific example according to a second embodiment;
FIG. 17 shows an interactive user interface for specifying a color;
FIG. 18 is a flow chart showing blank rendering processing according to a third embodiment;
FIG. 19 shows a specific embodiment according to a third embodiment;
FIG. 20 shows the structure of a composition unit 10;
FIG. 21 shows a process of executing plane shift in the right direction for each line data;
FIG. 22 shows a process of executing plane shift in the left direction for each line data;
FIG. 23 is a flow chart showing processing of reading into a line memory;
FIG. 24 shows an example of plane shift of the background plane; and
FIG. 25 shows a user's discomfort feeling due to the stereoscopic effect caused by performing plane shift;

### [Description of Embodiments]

The following describes embodiments of the present invention with reference to the drawings.

### (First Embodiment)

### <Overall Structure>

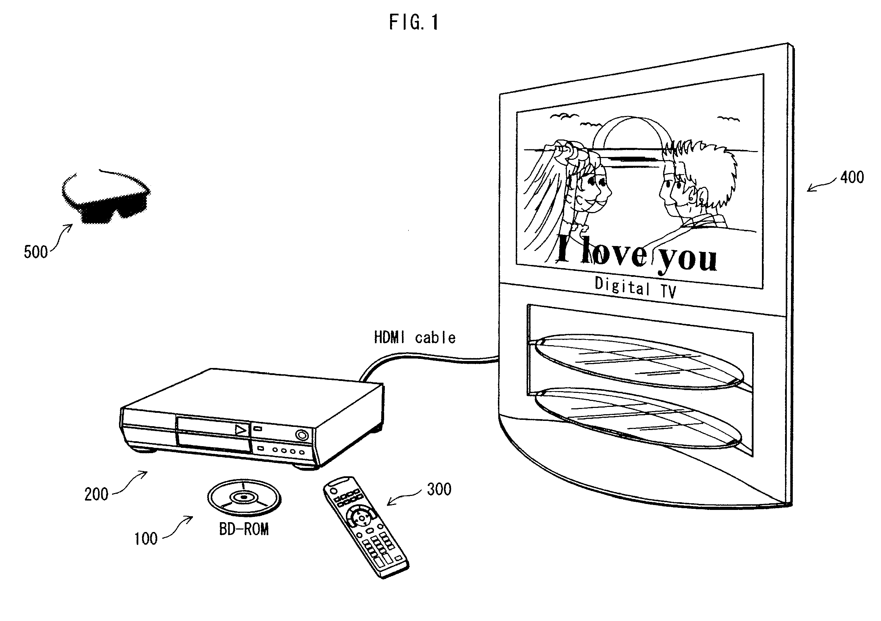

FIG. 1 shows a usage pattern of a recording medium and a playback apparatus. As shown in FIG. 1, a BD-ROM 100 taken as an example of a recording medium and a playback apparatus 200 compose a home theater system together with a remote control 300, a TV 400, and liquid crystal shutter glasses 500, and are used by a user.

The BD-ROM 100 provides the above home theater system with a movie, for example.

The playback apparatus 200 is connected with the TV 400, and plays back the BD-ROM 100.

The remote control 300 is a device that receives an operation for the hierarchized GUI from the user. In order to receive such an operation, the remote control 100 includes a menu key for calling menus composing the GUI, an arrow key for moving a focus of the GUI parts composing each menu, a decision key for performing determined operation on the GUI parts composing each menu, a return key for returning to higher order hierarchized menus, and numerical keys.

The TV 400 provides the user with a dialogical operational environment by displaying a video of the movie, a menu, and the like.

The liquid crystal shutter glasses 500 are composed of liquid crystal shutters and a control unit, and realize stereoscopic viewing with use of binocular disparity of the user's eyes. Liquid crystal lenses having a feature that the transmittance of light is changed by changing applied voltage are used for the liquid crystal shutters of the liquid crystal shutter glasses 500. The control unit of the liquid crystal shutter glasses 500 receives a SYNC signal for switching between a right-view image and a left-view image that are transmitted from the playback apparatus 200, and switches between a first state and a second state in accordance with this SYNC signal.

In the first state, the control unit adjusts an applied voltage such that light does not transmit through a liquid crystal lens corresponding to the right view, and adjusts the applied voltage such that light transmits through a liquid crystal lens corresponding to the left view. In such a state, the liquid crystal shutters provide view of an image for the left-view (hereinafter, "left-view image").

In the second state, the control unit adjusts an applied voltage such that light transmits through the liquid crystal lens corresponding to the right view, and adjusts the applied voltage such that light does not transmit through the liquid crystal lens corresponding to the left view. In such a state, the liquid crystal shutters provide view of an image for the right-view (hereinafter, "right-view image").

Generally, the right-view image and left-view image look a little different due to the difference between positions. With use of this difference, the user can recognize an image as a stereoscopic image. Thus, by synchronizing timing of switching between the above first state and second state with timing of switching between the right-view image and the left-view image, the user confuses a planar display with a stereoscopic display.

Next, a description is given of a time interval in displaying a right-view video and a left-view video.

Specifically, with respect to a planar image, there is a difference between a right-view image and a left-view image that corresponds to binocular disparity of the user. By displaying theses images while switching the images at a short time interval, the images appear as if the images are displayed stereoscopically.

The short time interval may be a time period that allows the user to confuse the planar images with stereoscopic images when the switching and the displaying are performed as stated in the above.

This concludes the description of the home theater system.

### <Recording Medium>

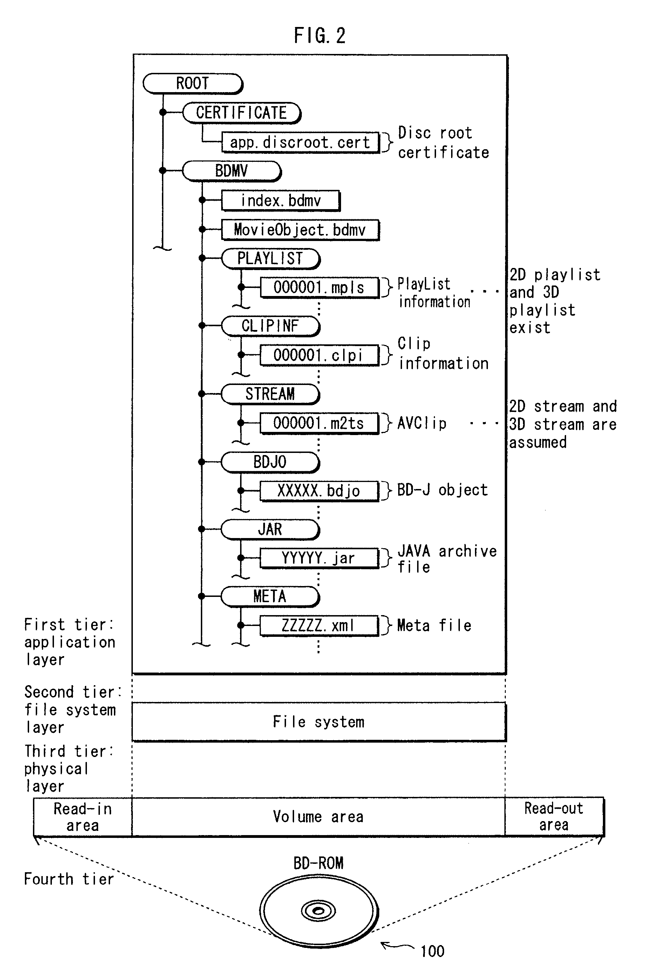

The following describes a recording medium to be played back by the playback apparatus 200. The playback apparatus 200 plays back the BD-ROM 100. FIG. 2 shows the internal structure of the BD-ROM 100.

The BD-ROM is shown in a fourth tier from the top in FIG. 2, and a track on the BD-ROM is shown in a third tier. Although the track is usually formed in a spiral manner from an inner circumference to an outer circumference, the track is drawn in a laterally-expanded manner in FIG. 2. This track consists of a read-in area, a volume area and a read-out area. Also, in the read-in area exists a special area called BCA (Burst Cutting Area) that can be read only by a drive. This area cannot be read by an application, and accordingly is often used for the copyright protection technology.

The volume area shown in FIG. 2 has a layer model having a physical layer, a file system layer, and an application layer. Application data such as video data starting with file system information (volume) is stored in the volume area. The file system is UDF, ISO9660 or the like. In the file system, it is possible to read logic data recorded in the same manner as a normal PC, with use of a directory or a file structure. Also, a file name or a directory name consisting of 255 words can be read. A first tier of FIG. 2 shows an application layer format (application format) of the BD-ROM expressed using a directory structure. As shown in the first tier, in the BD-ROM, a CERTIFICATE directory and a BDMV directory exist under a Root directory.

Under the CERTIFICATE directory, a file of a root certificate of a disc (app.discroot.certificate) exists. This app.discroot.certificate is a digital certificate used in a process of checking whether an application has been tampered with, or identifies the application (hereinafter, signature verification) when executing a program of a JAVA™ application that performs dynamic scenario control using a JAVA™ virtual machine.

The BDMV directory is a directory in which data such as an AV content and management information used in the BD-ROM are recorded. Six sub-directories called "PLAYLIST directory", "CLIPINF directory", "STREAM directory", "BDJO directory", "JAR directory", and "META directory" exist under the BDMV directory. Also, two types of files including an Index.Bdmv and a MovieObject.bdmv are arrayed.

The STREAM directory is a directory storing a file which is a so-called transport stream body. A file (000001.m2ts) to which an extension "m2ts" is given exists in the STREAM directory.

A file (000001.mpls) to which an extension "mpls" is given exists in the PLAYLIST directory.

A file (000001.clpi) to which an extension "clpi" is given exists in the CLIPINF directory.

A file (XXXXX.bdjo) to which an extension "bdjo" is given exists in the BDJO directory.

A file (YYYYY.jar) to which an extension "jar" is given exists in the JAR directory.

An XML file (ZZZZZ.xml) exists in the META directory.

The following describes these files.

### <A VClip>

Firstly, a description is given of the file to which the extension "m2ts" is given. The file to which the extension "m2ts" is given is a digital AV stream in the MPEG2-TS (Transport Stream) format, and is acquired by multiplexing a video stream, one or more audio streams, a graphics stream, and the like. The video stream represents a video of the movie, and the audio stream represents audio part of the movie. In the case of the 3D stream, both of left-eye data and right-eye data may be included in m2ts, or m2ts may be prepared separately for each of the left-eye data and the right-eye data. It is preferable to use a codec (e.g. MPEG-4 AVC MVC) in which a left-view stream and a right-view stream refer to each another in order to save space to be used for streams. Video streams compressed and encoded with use of such a codec are called MVC video streams.

There are kinds of MVC video streams including a base view video stream and an enhanced view video stream. The base view video stream is one of a video stream composing the left view video and a video stream composing the right view video that realizes planar view display. Meanwhile, the "enhanced view video stream" is the other one of a video stream composing the left view video and a video stream composing the right view video that is not the base view video stream. Picture data pieces composing the enhanced view video stream are compressed and encoded based on frame correlativity with picture data pieces composing the base view stream.

### <PlayList Information>

The file to which the extension "mpls" is given is a file storing PlayList (PL) information. The PL information defines a playlist by referring to the AVClip.

In the present embodiment, it is possible to determine whether streams to be played back include a 3D video stream, based on a structural format of the PlayList (PL) stored on the BD-ROM.

The PlayList information includes MainPath information, Subpath information and PlayListMark information.

1) The MainPath information defines a logic playback section by defining at least one pair of a time point (In_Time) and a time point (Out_Time) on a playback time axis of an AV stream. The MainPath information has a stream number table (STN_table) that stipulates which elementary streams that have been multiplexed into AV stream are permitted to be played back and are not permitted to be played back.

2) The PlayListMark information includes information on specification of a time point corresponding to a chapter in a part of the AV stream specified by the pair of the In_Time information and the Out_Time information.

3) The Subpath information is composed of at least one piece of SubPlayltem information. The SubPlayltem information includes information on specification of an elementary stream to be played back in synchronization with the AV stream and a pair of In_Time information and Out_Time information on the playback time axis of the elementary stream. The Java™ application for controlling playback instructs a Java™ virtual machine to generate a JMF (Java Media Frame work) player instance that plays back this PlayList information. This starts the playback of the AV stream. The JMF player instance is actual data generated on a heap memory of the virtual machine based on the JMF player class.

Hereinafter, a stream including only a stream for 2D playback is referred to as a "2D stream", and a stream including both a stream for 2D playback and a stream for 3D playback is referred to as a "3D stream".

### <Clip Information>

The file to which the extension "clpi" is given is Clip information which is in one-to-one correspondence with AVclip information. Because of being management information, the Clip information has an encoding format of the stream in the AVClip, a frame rate, a bit rate, information on resolution or the like, and an EP_map showing a starting point of GOPs. The Clip information and the PL information are each classified as a "static scenario".

### <BD-J Object>

The following describes the file to which the extension "BD-J object" is given.

According to the BD-ROM standards, by executing an application program during playback of a video, it is possible to perform any computer processing such as dynamic playback control and interaction with a user during playback, while the video is being played back. Java™ is used as the application platform standards for BD-ROM. A Java™ platform adopted to the BD-ROM standards is referred to as BD-Java or BD-J. An application to be executed is referred to as a BD-Java application or a BD-J application.

The file to which the extension "BD-J object" is given is a file storing a BD-J object. The BD-J object is information that defines a title by associating an AVClip string defined by the PlayList information with an application.

The entity of the Java™ application corresponds to a Java™ archive file (YYYYY.jar) stored in the JAR directory under the BDMV directory shown in FIG. 2.

The application is for example a Java™ application, and is composed of one or more xlet programs loaded in the heap area (also called "work memory") of the virtual machine. The application is composed of the xlet program loaded in the work memory and data.

The BD-J object includes various types of information such as information indicating association with a playback title, information indicating association with a JAR file described later, reference values of Play List information, and an application management table.

The application management table is a table for causing the playback apparatus 200 to perform application signaling that runs the title as a life cycle.

The application management table includes an "application identifier" for identifying an application to be operated in a case where a title corresponding to the BD-J object is a current title, and a "control code".

The control code set as AutoRun indicates that the application is to be loaded onto a heap memory, and is to be automatically booted up. The control code set as Present indicates that the application is to be loaded onto the heap memory, and is to be booted up in response to a call from other application.

### <Meta File>

In the meta file (ZZZZZ.xml) included in the META directory, various information pieces relating to the movie stored in the disc are stored. The information pieces stored in the meta file are, for example, a name of the disc and an image of the disc, information on a creator of the disc, and a title name for each title.

A certain file such as the meta file is not necessarily essential in the BD-ROM standards. It is possible to play back the BD-ROM 100 a recording medium in which a video is recorded in the BD-ROM standards even if a certain file is missing.

This concludes the description of the BD-ROM 100.

### <Playback Apparatus>

The following describes the structure of the playback apparatus 200 according to the present embodiment. The playback apparatus 200 is based on the assumption that stereoscopic view of a background image is realized by performing plane shift, and an L image and an R image for a video are prepared beforehand. Also, L images and R images for interactive graphics and presentation graphics may be prepared beforehand. Furthermore, stereoscopic view of interactive graphics and presentation graphics may be realized by performing plane shift.

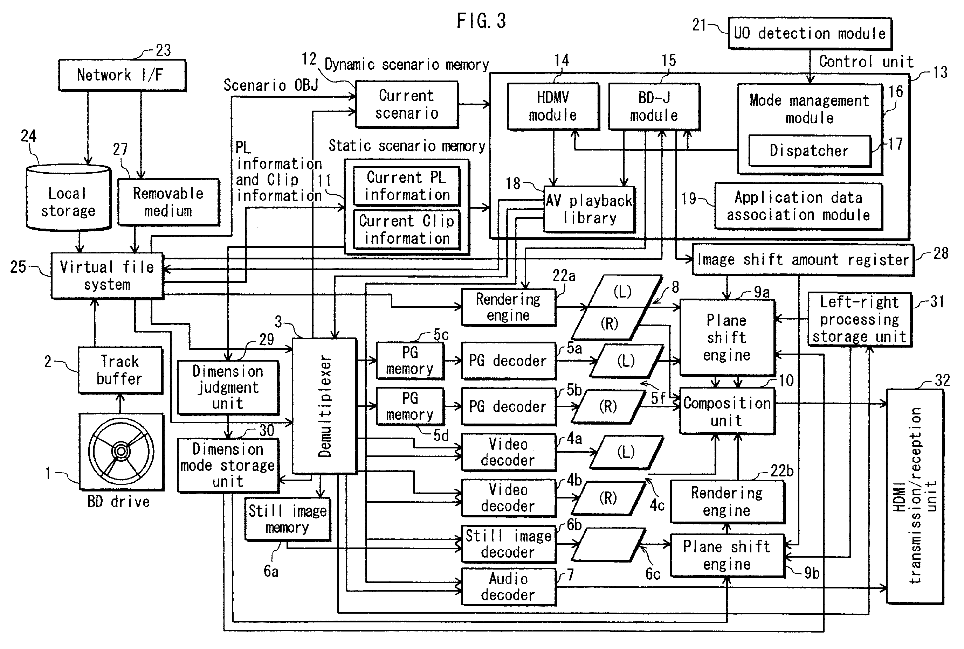

FIG. 3 is a block diagram showing the internal structure of the playback apparatus 200. As shown in FIG. 3, the playback apparatus 200 includes a BD-ROM drive 1, a track buffer 2, a demultiplexer 3, video decoders 4a and 4b, a video plane 4c, presentation graphics (PG) decoders 5a and 5b, presentation graphics (PG) memories 5c and 5d, a presentation graphics (PG) plane 5f, a still image memory 6a, a still image decoder 6b, a background plane 6c, an audio decoder 7, an interactive graphics (IG) plane 8, plane shift engines 9a and 9b, a composition unit 10, a static scenario memory 11, a dynamic scenario memory 12, a control unit 13, an HDMV module 14, a BD-J module 15, a mode management module 16, a dispatcher 17, an AV playback library 18, an application data association module 19, a UO detection module 21, rendering engines 22a and 22b, a network interface 23, a local storage 24, a virtual file system 25, a removable medium 27, an image shift amount register 28, a dimension judgment unit 29, a dimension mode storage unit 30, a left-right processing storage unit 31, and an HDMI transmission/reception unit 32.

The BD-ROM drive 1 performs loading/ejecting of a BD-ROM, and accessing of the BD-ROM.

The BD drive 1 specifically includes a semiconductor laser (not shown), collimator lenses (not shown), a beam splitter (not shown), an objective lens (not shown), a condenser lens (not shown), an optical head (not shown) including a light detector (not shown). Light beam output from the semiconductor laser is collected on an information side of the optical disc through the collimator lenses, the beam splitter, and the objective lens. The collected light beam is reflected and diffracted on the optical disc, and then collected by the light detector through the objective lenses, the beam splitter, and the condenser lenses. The generated signal corresponds to data read from the BD-ROM in accordance with the amount of light collected by the light detector.

The track buffer 2 is typically an FIFO memory. The track buffer 2 temporarily stores therein a source packet constituting an extent constituting a stream read from the BD-ROM, adjusts the transfer speed, and then transfers the source packet to the demultiplexer 3.

The demultiplexer 3 specifically includes a source packet depacketizer and a PID filter. The demultiplexer 3 demultiplexes, via the virtual file system 25, a transport stream stored in the BD-ROM 100 loaded onto the BD-ROM drive 1, the local storage 24, or the removable medium 27.

Also, the demultiplexer 3 switches between processing for stereoscopic viewing (3D) and processing for 2D, using the dimension judgment unit 29.

A video frame obtained by demultiplexing for left view constituting a GOP is output to the video decoder 4a. A video frame obtained by demultiplexing for right view constituting the GOP is output to the video decoder 4b.

Also, a video frame for 2D is output to the video decoder 4a. The video frame for 2D decoded by the video decoder 4a is written into the video plane for left eye (expressed as the code (L) in the video plane 4c in FIG. 3).

Audio frames constituting the GOP are output to the audio decoder 7.

A subtitle stream obtained by performing demultiplexing is stored in the presentation graphics memory. For example, when the subtitle stream includes a 3D subtitle stream (a subtitle stream for left view and a subtitle stream for right view), the subtitle stream for left view is written into the presentation graphics memory 5c, and the subtitle stream for right view is written into the presentation graphics memory 5d. Also, for example, when the subtitle stream includes a subtitle stream for 2D (a subtitle stream to be used for realizing planar display), the subtitle stream for 2D is written into the presentation graphics memory 5c.

Scenario information obtained by performing the demultiplexing is stored in the dynamic scenario memory 12.

The demultiplexing performed by the demultiplexer 3 includes conversion processing of converting TS packets to PES packets.

The video decoder 4a decodes the video frames output from the demultiplexer 3, and outputs a picture in uncompressed format into the left view video plane 4c (expressed as the code (L) in the video plane 4c in FIG. 3).

The video decoder 4b decodes the video frame output from the demultiplexer 3, and outputs a picture in uncompressed format into the right view video plane 4c (expressed as the code (R) in the video plane 4c in FIG. 3).

The video plane 4c is a plane memory capable of storing therein picture data having a resolution of 1920 × 2160 (1280 × 1440). The video plane 4c has a left-eye plane (expressed as the code (L) in the video plane 4c in FIG. 3) having an area capable of storing therein data having a resolution of 1920 × 1080 (1280 × 720) and a right-eye plane (expressed as the code (R) in the video plane 4c in FIG. 3) having an area capable of storing therein data having a resolution of 1920 × 1080 (1280 × 720). A picture in uncompressed format is stored in each of the planes.

Although an example is shown of a case where each of the left-eye plane and the right-eye plane included in the video plane 4c is a physically separated memory, the structure of the video plane 4c is not limited to this. Therefore, areas for the left-eye plane and the right-eye plane respectively may be provided in one memory, and corresponding video data is written in each of the areas.

Each of the presentation graphics decoders 5a and 5b decodes TS packets composing the subtitle stream that is output from the demultiplexer 3 and written into the presentation graphics memories 5c and 5d, and writes the uncompressed graphics subtitles into the presentation graphics plane 5f. The "subtitle streams" decoded by the presentation graphics decoders 5a and 5b are data pieces each showing subtitles compressed by a run-length coding, and is defined by pixel codes showing a Y value, a Cr value, a Cb value, and an α value and a run lengths of the pixel codes.

The presentation graphics plane 5f is a graphics plane capable of storing therein graphics data (for example, subtitle data) having a resolution of 1920 × 1080 (1280 × 720) which has been obtained by decoding a subtitle stream, for example. The presentation graphics plane 5f has a left-eye plane (expressed as the code (L) in the presentation graphics plane 5f in FIG. 3) having an area capable of storing data having a resolution of 1920 × 1080 (1280 × 720), for example, and a right-eye plane (expressed as the code (R) in the presentation graphics plane 5f in FIG. 3) having an area capable of storing data having a resolution of 1920 × 1080 (1280 × 720), for example. Graphics data output from the presentation graphics decoders 5a and 5b is stored in the presentation graphics plane 5f.

Although an example is shown of a case where each of the left-eye plane and the right-eye plane included in the presentation graphics plane 5f is a physically separated memory, the structure of the presentation graphics plane 5f is not limited to this. Therefore, areas for the left-eye plane and the right-eye plane respectively may be provided in one memory, and a corresponding video data piece is written into each of the areas.

The still image memory 6a stores therein background (still image) data that has been extracted from the virtual package and is to be a background image.

The still image decoder 6b decodes the background data stored in the still image memory 6a, and writes the uncompressed background data into the background plane 6c.

The background plane 6c is a plane memory capable of storing therein background data to be a background image having a resolution of 1920 × 1080 (1280 × 720), for example.

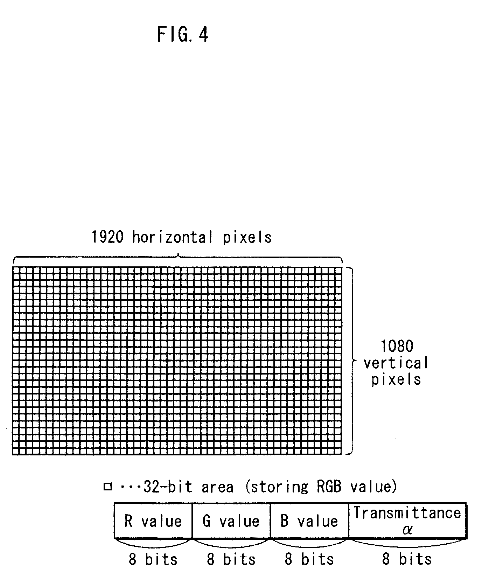

FIG. 4 shows the internal structure of the background plane. When the resolution is set to 1920 × 1080, the background plane is composed of 32-bit memory elements, and has a size of 1920 horizontal × 1080 vertical pixels, as shown in FIG. 4. In other words, the background plane has a memory allocation capable of storing therein 32-bit R, G, B, and α values per pixel at a resolution of 1920 × 1080. The 32-bit R, G, B, and × values stored in the memory element are composed of an 8-bit R value, an 8-bit G value, an 8-bit B value, and an 8-bit transparency α, respectively. Memory elements stores therein R, G, B and α values corresponding to non-transparent colors. The background is written with use of these R, G, B and α values corresponding to the non-transparent colors.

Returning to FIG. 3, the audio decoder 7 decodes audio frames output from the demultiplexer 3, and outputs audio data in uncompressed format.

The interactive graphics plane 8 is a graphics plane having a memory region capable of storing therein graphics data having a resolution of 1920 × 1080 (1280 × 720) rendered by the BD-J application using the rendering engine 22a, for example. The interactive graphics plane 8 has a left-eye plane (expressed as the code (L) in the interactive graphics plane 8 in FIG. 3) having an area capable of storing data having a resolution of 1920 × 1080 (1280 × 720) and a right-eye plane (expressed as the code (R) in the interactive graphics plane 8 in FIG. 3) having an area capable of storing data having a resolution of 1920 × 1080 (1280 × 720).

Although an example is shown of a case where each of the video plane 4c, the presentation graphics plane 5f, and the interactive graphics plane 8 shown in FIG. 3 has a storage area for storing data for left eye and data for right eye, the structure is not limited to this. Alternatively, one storage area may be alternately used as a storage area for right eye and a storage area for left eye.

The plane shift engine 9a shifts coordinates of pixel data stored in the presentation graphics plane 5f and/or the interactive graphics plane 8 in a certain direction (for example, a horizontal direction of the screen), based on a flag stored in the left-right processing storage unit 31 and a value stored in the image shift amount register 28 (hereinafter, this operation is referred to as to "perform plane shift"). In this case, even if the same rendering object is used for the data stored in the left-eye interactive graphics plane and the data stored in the right-eye interactive graphics plane, it is possible to display the object as if it were displayed in a position closer to the viewer than a position of the screen by the shifting. That is, even if the objects of the graphics such as subtitles and the GUI used for data stored in the presentation graphics plane and the data stored in the interactive graphics plane 10 are not materials for the stereoscopic viewing, it is possible to obtain an effect that the objects are displayed in a position closer to the viewer than a position of the screen. When the viewer wants only the graphics to have a stereoscopic effect with video displayed two dimensionally, the composition unit 10 uses the left-view video for both the left view and the right view instead of using the set of the left-view video and the right-view video, and composites the shifted data stored in the presentation graphics plane and the shifted data stored in the interactive graphics plane with the video.

The target of plane shift is necessarily both the presentation graphics plane 5f and the interactive graphics plane 8. Alternatively, the target of plane shift may be only the interactive graphics plane 8 or only the presentation graphics plane 5f.

Similarly, the plane shift engine 9b shifts coordinates of pixel data pieces stored in the background plane 6c in a predetermined direction (e.g. in the horizontal direction on a screen) based on the flag stored in the left-right processing storage unit 31 and a value stored in the image shift amount register 28. In this case, even if the same rendering object is used for the data stored in the left-eye background plane and the data stored in the right-eye background plane, it is possible to display the object as if it were displayed in a position closer to the viewer than a position of the screen by the shifting.

The composition unit 10 composites data respectively stored in the interactive graphics plane 8, the presentation graphics plane 5f, the video plane 4c, and the background plane 6c with one another. Each of the interactive graphics plane 8, the presentation graphics plane 5f, the video plane 4c, and the background plane 6c has a separate layer structure. Data stored in each of the planes is composited (overlaid) in the order of the background plane 6c, the video plane 4c, the presentation graphics plane 5f, and the interactive graphics plane 8 from the bottom. That is, even in the case where a planar graphics is composited with a stereoscopic video, the composition unit 10 composites a video stored in the video plane 4c with a background image stored in the background plane 6c, composites subtitles stored in the graphics plane 5f with the composited image, and composites a graphics stored in the interactive graphics plane 8 with the currently composited image. Then, the resultant composited image is displayed. Otherwise, graphics part appears to be embedded in the video, and thus looks unnatural.

The static scenario memory 11 is a memory for storing therein current PL information and current clip information. The current PL information is PL information that is currently a processing target among a plurality of pieces of PL information pieces readable from the virtual file system 25. The current clip information is currently a processing target among a plurality of pieces of clip information readable from the virtual file system 25.

The dynamic scenario memory 12 is a memory for storing therein s current dynamic scenario, and is used for processing performed by the HDMV module 14 and the BD-J module 15. The current dynamic scenario is currently an execution target among a plurality of pieces of scenario information readable from the virtual file system 25.

The control unit 13 is a microcomputer system that includes a ROM, a RAM, and a CPU. The ROM stores therein programs for controlling the playback apparatus 200. The programs stored in the ROM are loaded into the CPU, and cooperation of the programs with hardware resources realizes the functions of the HDMV module 14, the MD-J module 15, the mode management module 16, the dispatcher 17, the AV playback library 18, and the application data association module 19.

The HDMV module 14 is a DVD video virtual player, which is a main operational part in the HDMV mode, and is a main execution part in the HDMV mode. The HDMV module 14 includes a command interpreter, and controls the HDMV mode by decoding a navigation command composing a movie object and executing the decoded navigation command. Since the navigation command is described in syntax similar to DVD-Video, it is possible to realize DVD-Video like playback control by executing such a navigation command.

The BD-J module 15 is a middleware platform including a Java™ virtual machine, and reads a byte code from a class file included in a JAR archive file and stores the read byte code in the heap memory thereby to execute the BD-J application.

The BD-J application is recorded in the BD-ROM 100 in association with a video to be played back. When the video to be played back is played back, the BD-J application is read to the dynamic scenario memory 12, and then executed by the BD-J module 15.

The Java™ virtual machine interprets the BD-J application, and causes the CPU to execute the BD-J application. Part of the BD-J module 15 may be realized by hardware or software.

The mode management module 16 stores therein a mode management table read from the virtual file system 25, and performs mode management and branch control. The mode management performed by the mode management module 16 is allocation of modules. That is, the mode management module 16 decides which of the HDMV module 14 and the BD-J module 15 is to execute the dynamic scenario.

The dispatcher 17 selects only UOs that are suitable for the current mode of the playback apparatus among user operations (UOs) received from the UO detection module 21, and passes the selected UOs to the module that operates in the mode. For example, in the case of receiving UOs such as up, down, right and left key operation or an activation operation in the HDMV mode, the dispatcher 17 outputs the UOs to the module that is in the HDMV mode.

The AV playback library 18 executes AV playback functions and playlist playback functions according to the function calls from the HDMV module 14 and the BD-J module 15. The AV playback functions are functions inherited from DVD players and CD players. The AV playback functions include playback start, playback stop, pause, cancellation of pause, cancellation of still image function, fast forwarding at a speed designated with immediate value, rewinding at a speed designated with immediate value, audio switching, sub-video switching, angle switching, and so on. The playlist playback functions are to execute, among the AV playback functions, the playback start, the playback stop and so on according to the playlist information.

The application data association module 19 has a function of generating application association information based on information read from the virtual file system 25 and a result of calculation performed in the playback apparatus 200 and attribute information set by an application, and updating the generated application information.

The UO detection module 21 receives user's operations (UOs), which are input to the GUI. The user's operations are input via a remote equipment such as a remote controller or directly input via an interface such as a button provided in the playback apparatus 200.

The rendering engine 22a includes base software such as Java 2D and OPEN-GL, and performs rendering processing on the interactive graphics plane 8 in accordance with the instruction issued from the BD-J module 15 in the BD-J mode. The BD-J module 15 includes libraries for performing rendering processing on the interactive graphics plane 8 via the rendering engine 22a. The rendering processing includes rendering of color-specified lines and figures such as rectangles, filling of specified regions, and copy and paste of specified images. The BD-J application can realize graphics rendering processing by calling theses libraries.

Also, in the HDMV mode, the rendering engine 22a renders graphics data (e.g. graphics data in response to an input button) extracted from the graphics stream other than a stream corresponding to the subtitles (subtitle stream), and writes the rendered graphics data into the interactive graphics plane 8.

The rendering engine (hereinafter, also referred to as "blank rendering engine") 22b includes base software such as Java2D and OPEN-GL, like the rendering engine 22a, and performs rendering processing on a no-pixel (hereinafter, referred to also as "blank") region that has been obtained as a result of the plane shift performed by the plane shift engine 9b in accordance with the instruction issued from the BD-J module 15 in the BD-J mode. Hereinafter, rendering processing performed on no-pixel region is referred to as "blank rendering processing". The blank region and the blank rendering processing are described later.

The network interface 23 is for performing communication with an external apparatus outside the playback apparatus 200, and is capable of accessing a server accessible via the web and a server connected via a local network. For example, the network interface 23 is used for downloading BD-ROM additional contents publicized on the web.

The BD-ROM additional contents include, for example, an additional sub-audio, subtitles, extra videos, applications and so on which are not recorded on the original BD-ROM. The BD-J module 15 can control the network interface 23, and download the additional contents published on the Internet onto the local storage 24 and the removable medium 27. Merge management information is downloaded onto the local storage 24 or the removable medium 27. The merge management information shows how to merge the downloaded additional contents with data stored in the BD-ROM

The local storage 24 is a magnetic recording apparatus such as a hard disk built in the playback apparatus. The local storage 24 records therein transport streams and various types of data to be used for playback in a file format recorded in the BD-ROM 100 or a file format pursuant to this.

The virtual file system 25 is a file system for providing with a read/write mechanism for files recorded in the BD-ROM, the local storage 24, or the removable medium 27.

The file access necessary for playback of BD-ROM is generally performed on the BD-ROM 100. The virtual file system 25 includes a mechanism for performing virtually address conversion on a file recorded in the local storage 24 or the removable medium 27 such that as if the file is recorded in the BD-ROM 100. In other words, the virtual file system 25 provides a mechanism for abstracting a physical recording destination of files. As a result, it is possible to structure a virtual BD-ROM (virtual package).

The virtual package and the original BD-ROM can be referred to/from a command interpreter which is a main operational part in the HDMV mode, and the BD-J platform which is a main operational part in the BD-J mode. The playback apparatus 200 performs the playback control with use of the data stored on the BD-ROM and the data stored on the local storage during the playback of the virtual package.

The removable medium 27 is, for example, a portable recording medium inserted from an external slot loaded onto the playback apparatus 200. A flash medium such as an SD card is typically used as a type of the removable medium 27. Alternatively, it may be possible to use a USB memory, a removable hard disk, or any other types of recording media.

A description is given taking a case where the removable medium 27 is a semiconductor memory card as an example. The playback apparatus 200 is provided with a slot (not shown) into which the removable medium is inserted, and an interface (e.g. memory card I/F) for reading the removable medium inserted into the slot. When the semiconductor memory is inserted into the slot, the removable medium and the playback apparatus 200 are electrically connected to each other, and it is possible to convert data recorded in the semiconductor memory into an electrical signal and read the electrical signal with use of the interface (e.g. memory card I/F).

The image shift amount register 28 stores therein a plane offset (offset value) showing a direction in which a plane is to be shifted by the plane shift engines 9a or 9b and a degree to which the plane is to be shifted. The plane offset may be set by a user that views the playback apparatus 200. Alternatively, the plane offset may be given within the BD-J application, and set via the BD-J module 15 in execution.

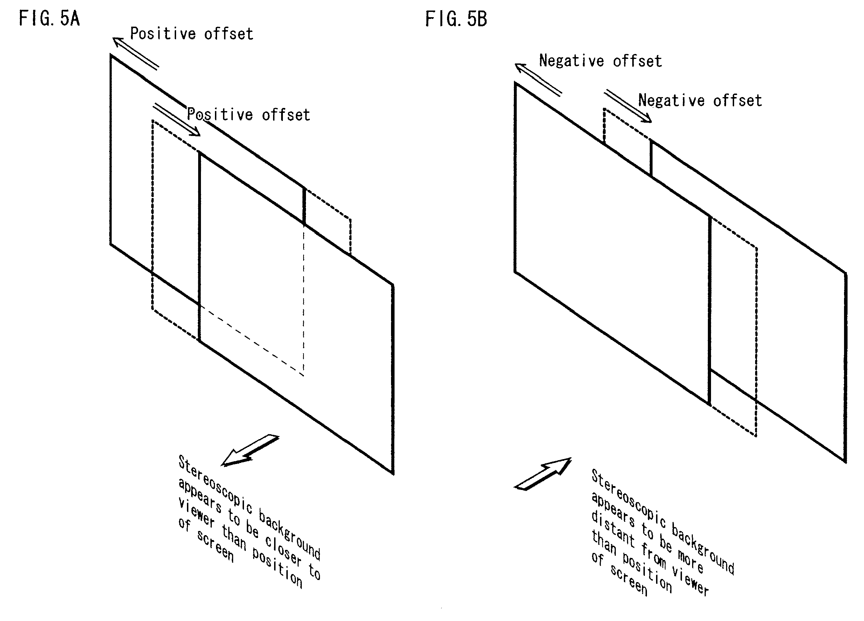

FIG. 5A and FIG. 5B show how the background is viewed changes depending on the difference between plus and minus of the plane offset.

An image that is closer to the viewer in each of FIG. 5A and FIG. 5B is a background for the left view (hereinafter "left- view background") output after coordinates of each of the pixel data pieces composing the background data have been shifted. An image that is more distant from the viewer in each of FIG. 5A and FIG. 5B is a background for the right view (hereinafter "right- view background") output after coordinates of each of the pixel data pieces composing the background data have been shifted to be composited with a right-view video.

FIG. 5A shows a case where the sign of the plane offset is positive (the plane shift engine shifts left-view background in the right direction, and shifts the right-view background in the left direction). When the sign of the plane offset is positive, the background to be composited with the left-view video appears to be in a position more to the right than the background to be composited with the right-view video. That is, since a point of convergence (focus position) is closer to the viewer than the position of the screen, the background also appears to be closer to the viewer than the position of the screen.

FIG. 5B shows a case where the sign of the plane offset is negative. When the sign of the plane offset is negative, the background to be composited with the right-view video appears to be in a position more to the left than the background to be composited with the right-view video. That is, since a point of convergence (focus position) is more distant from the viewer than the position of the screen, the background also appears to be distant from the viewer than the position of the screen.

Returning to FIG. 3, the dimension judgment unit 29 judges whether a video that is a playback target is for stereoscopic viewing (3D) or for 2D, and outputs a result of the judgment to the dimension mode storage unit 30.

If a current PL or a current stream includes a flag showing whether the video supports stereoscopic viewing (3D), the dimension judgment unit 29 may make the judgment based on the flag. Alternatively, the video may be switched in accordance with an instruction from the user of the playback apparatus 200.

In the first embodiment, the following description is based on the assumption that the PlayList includes a dimension identification flag showing whether a video is for 3D or for 2D.

The dimension mode storage unit 30 stores therein a dimension mode. The dimension mode shows whether a video currently being played back is for stereoscopic viewing (3D) or for normal 2D.

The left-right processing storage unit 31 stores therein a flag showing whether current output processing is for left-view or right-view. The flag stored in the left-right processing storage unit 31 shows whether or not data to be output to a display device (the TV 400 in FIG. 1) connected to the playback apparatus 200 shown in FIG. 1 is for left-view or right-view. While the output is for left-view is, the flag stored in the left-right processing storage unit 31 is set to show the left-view output. Also, while the output is for right-view, the flag stored in the left-right processing storage unit 31 is set to show the right-view output.

The HDMI transmission/reception unit 32 includes an interface that complies with the HDMI standard (HDMI: High Definition Multimedia Interface), for example. The HDMI transmission/reception unit 32 performs transmission and reception such that the playback apparatus 200 and a device (the TV 400 in this example) connected via HDMI with the playback apparatus 200 comply with the HDMI standard. The HDMI transmission/reception unit 32 transmits a video composited by the composition unit 10 and uncompressed audio data decoded by the audio decoder 7 to the TV 400.

The TV 400 stores therein information regarding whether the TV 400 is capable of displaying data stereoscopically, information regarding resolutions at which the planar display can be performed, and information regarding resolutions at which the stereoscopic display can be performed. When the playback apparatus 200 issues a request for information via the HDMI transmission/reception unit 32, the TV 400 gives the playback apparatus necessary information requested by the TV 400 (e.g. information regarding whether the TV 400 is capable of displaying data stereoscopically, information regarding resolutions at which the planar display can be performed, and information regarding resolutions at which the stereoscopic display can be performed).

In this way, the playback apparatus 200 is capable of obtaining, from the TV 400, the information regarding whether the TV 400 is capable of displaying data stereoscopically via the HDMI transmission/reception unit 32.

This completes the description of the structure of the playback apparatus 200 relating to the present embodiment.

### <Playback Processing>

Next, FIG.s 6 and 7 each show a flow chart of playback processing of a 3D stream.

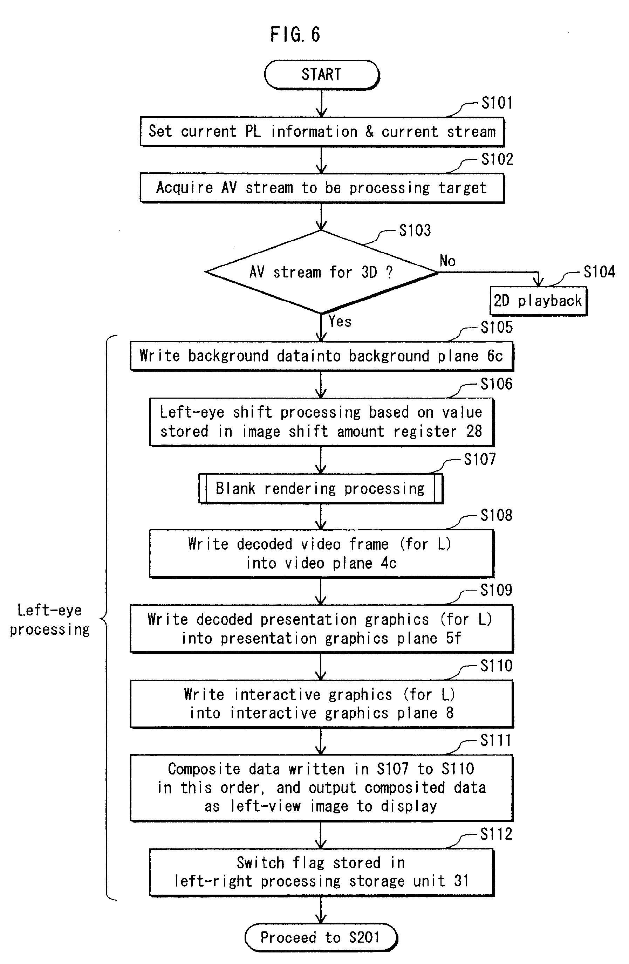

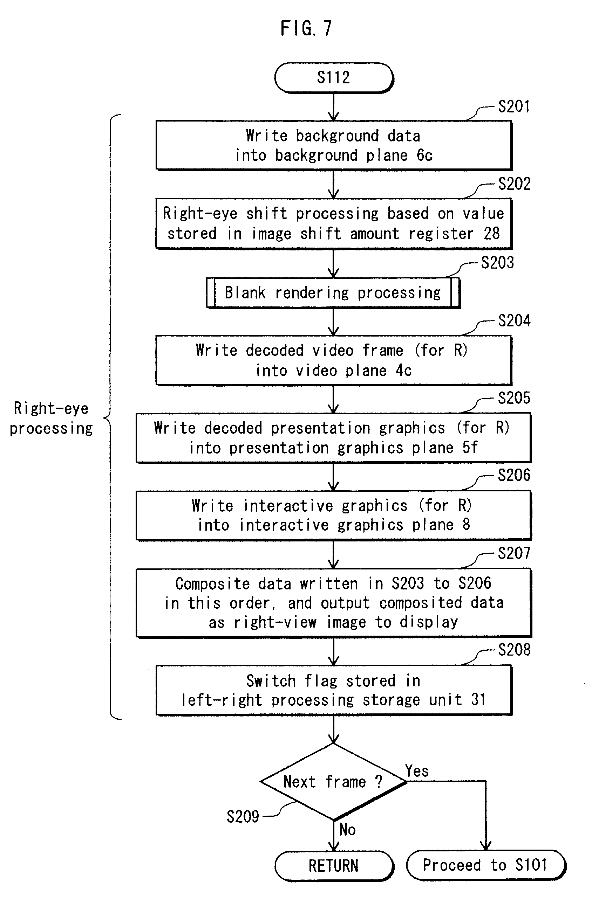

In these flow charts, L images and R images are prepared in advance respectively for interactive graphics and presentation graphics. Also, Steps S105 to S112 shown in FIG. 6 are processing for left view, and Steps S201 to S208 shown in FIG. 7 are processing for right view.

Firstly, when a current Play List is selected by some factors, the AV playback library 18 reads current PL information and current clip information that correspond to the current PlayList, and sets the read current PL information and current clip information in the static scenario memory 11 (Step S101).

The demultiplexer 3 refers to current PL information stored in the static scenario memory 11, and acquires an AV stream to be played back (Step S 102).

The demultiplexer 3 acquires a dimension identification flag from the current PL information stored in the static scenario memory 11, and transmits the acquired dimension identification flag to the dimension judgment unit 29. The dimension judgment unit 29 judges whether the AV stream to be played back is for 3D based on the dimension identification flag (Step S103).

If the AV stream to be played back is not for 3D, that is, if the AV stream is a 2D stream (Step S103: No), 2D video playback processing is performed (Step S104).

If the AV stream to be played back is for 3D (Step S103: Yes), stereoscopic playback is performed. The following describes the stereoscopic playback in detail.

The still image decoder 6b decodes background data stored in the still image memory 6a, and writes the uncompressed background data into the background plane 6c (Step S105).

The plane shift engine 9b performs left-eye shift processing of shifting the background plane 6c based on a value (plane offset) stored in the image shift amount register 28 (Step S 106).

After performing the left-eye shift processing, the rendering engine 22b performs blank rendering processing (Step S107). The details of the blank rendering processing are described later.

The video decoder 4a decodes the video frame output from the demultiplexer 3, and writes the uncompressed video frame (for L) into the video plane 4c (Step S108).

The presentation graphics decoder 5a decodes TS packets constituting a subtitle stream that have been output from the demultiplexer 3 and written into the presentation graphics memory 5c, and writes presentation graphics (for L) into the presentation graphics plane 5f (Step S 109).

The BD-J application writes interactive graphics (for L) into the interactive graphics plane 8 using the rendering engine 22a (Step S1 10).

The composition unit 10 composites background data, video data, presentation graphics data, and interactive graphics respectively written into the background plane 6c, the video plane 4c, the presentation graphics plane, and the interactive graphics plane in this order. Then, the composition unit 10 outputs the composited data to the display as left view data (Step S111). Here, a composition target in the background plane is background data on which shift processing has been performed.

Then, the composition unit 10 converts the flag stored in the left-right processing storage unit 31 in accordance with an output timing of the display (Step S112).

After left view processing in Steps S105 to S112, right view processing is performed. The basic flow of the right view processing is the same as that of the left view processing.

Firstly, the still image decoder 6b decodes background data stored in the still image memory 6a, and writes the uncompressed background data into the background plane 6c (Step S201).

The plane shift engine 9b performs right eye shift processing of shifting the background plane 6c based on a value stored in the image shift amount register 28 (Step S202).

After performing the right eye shift processing, the rendering engine 22b performs blank rendering processing (Step S203).

The video decoder 4b decodes a video frame output from the demultiplexer 3, and writes the uncompressed video frame (for R) into the video plane 4c (Step S204).

The presentation graphics decoder 5b decodes TS packets constituting a subtitle stream that have been output from the demultiplexer 3 and written into the presentation graphics memory 5d, and writes the presentation graphics (for R) into the presentation graphics plane 5f (Step S205).

The BD-J application writes interactive graphics (for R) into the interactive graphics plane 8 using the rendering engine 22a (Step S206).

The composition unit 10 composites the background data, the video data, the presentation graphics data, and the interactive graphics respectively written into the background plane 6c, the video plane 4c, the presentation graphics plane 5f, and the interactive graphics plane 8 in this order. Then, the composition unit 10 outputs the composited data to the display, as right view data (Step S207).

Then, the composition unit 10 converts the flag stored in the left-right processing storage unit in accordance with an output timing of the display (Step S208).

It is judged on whether there is a next frame (Step S209). As long as frames continue to be input (Step S209: Yes), the above processing is repeatedly performed.

### <Blank Rendering Processing>

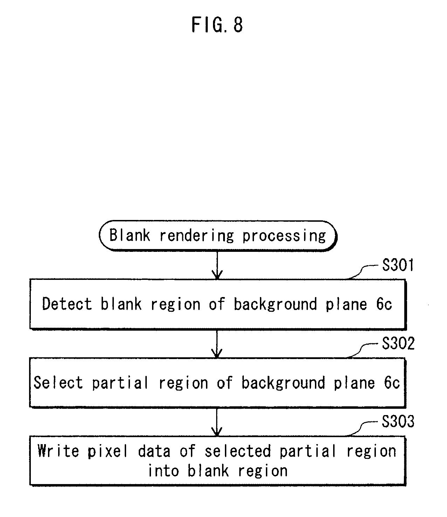

The following describes blank rendering processing performed by the rendering engine 22b. FIG. 8 is a flow chart showing the blank rendering processing.

Firstly, the rendering engine 22b detects a blank region included in a storage region of the background plane 6c for storing background data (Step S301).

Here, when the left edge and the right edge of the horizontal coordinates of the screen is X0 and X 1 respectively, and the top edge and the bottom edge of the vertical coordinates of the screen is Y0 and Y1 respectively, and the offset value is S, a blank region obtained as a result of plane shift in the left direction is represented by a rectangle region surrounded by points (X1 - S, Y0), (X1, Y0), (X1 - S, Y1), and (X1, Y1). Similarly, a blank region obtained as a result of plane shift in the right direction is represented by a rectangle region surrounded by points (X0, Y0), (S, Y0), (X0, Y1), and (S, Y1).

Then, the rendering engine 22 selects a partial region relating to the background plane 6c (Step S302). Here, the partial region relating to the background plane 6c is, for example, a region outside the background plane due to plane shift. Hereinafter, an image of the selected partial region is also referred to as a "clip image".

The rendering engine 22 writes pixel data of the selected partial region into the detected blank region (Step S303).

As a result, the background plane 6c to be overlaid with the video plane or the like is generated. The rendering processing is the same as rendring processing performed by a normal rendering engine, and accordingly description thereof is omitted here.

### <Specific Example>

The following describes plane shift and blank rendering processing with use of a specific example.

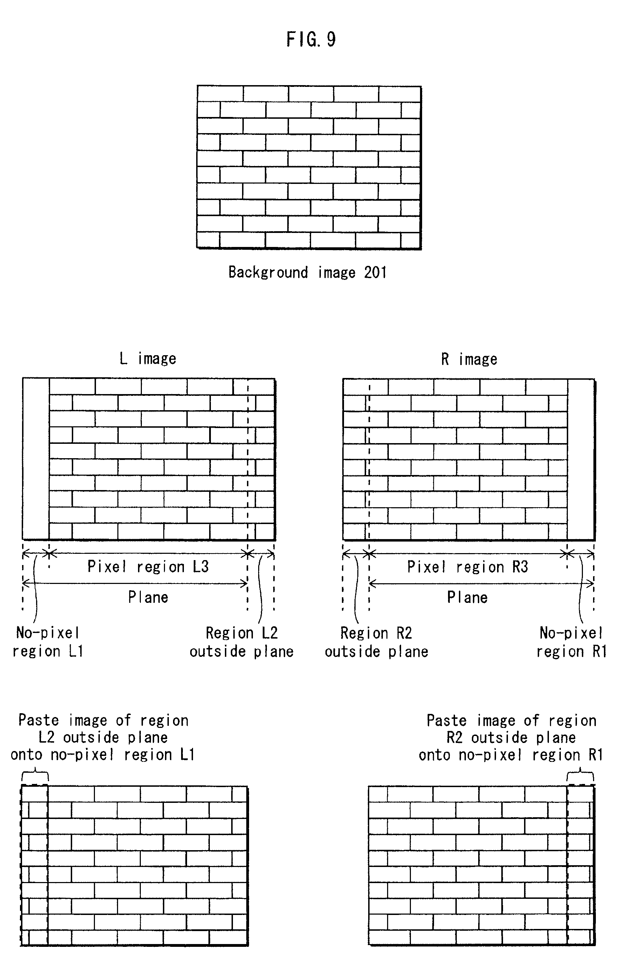

FIG. 9 shows a specific example of plane shift and blank rendering processing. In FIG. 9, the upper stage shows a background image 201 rendered on the background plane 6c. Here, the following describes how each of pieces of pixel data constituting the background data is stored in the background plane 6c.

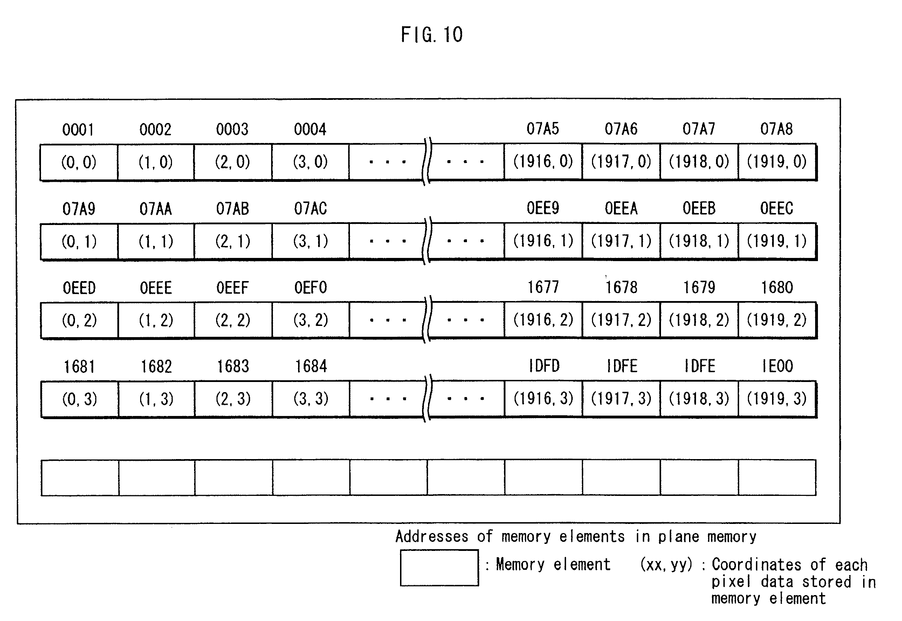

FIG. 10 shows pieces of pixel data stored in the graphics plane. In FIG. 10, squared frames are memory elements each having 32 or 8 bit length. Hexadecimal numerical values such as 0001, 0002, 0003, 0004, 07A5, 07A6, 07A7, 07A8, 07A9, 07AA, and 07AB are addresses serially allocated to these memory elements in the memory space of the MPU. Also, each of numerical values such as (0, 0), (1, 0), (2, 0), (3, 0), (1916, 0), (1917, 0), (1918, 0), and (1919, 0) stored in the respective memory elements shows coordinates of which pixel data is stored in a corresponding memory element.

The pixel data in coordinates (0, 0) is stored in the memory element whose address is 0001. The pixel data whose coordinates are (1, 0) is stored in a memory element whose address is 0002. The pixel data whose coordinates are (1918, 0) is stored in a memory element whose address is 07A7. The pixel data whose coordinates are (0, 1) is stored in a memory element whose address is 07A9. That is, it can be seen that background data is stored such that a plurality of lines composing a background image are composed of memory elements having serially-arranged addresses. Thus, these pieces of pixel data can be read in burst mode by sequentially performing DMA transfer to the memory elements having the serially-arranged addresses.

Returning to FIG. 9, an L image is shown at the left side of the middle stage, and an R image is shown at the right side of the middle stage. Here, by performing plane shift, the L image is shifted in the right direction by three pixels, and the R image is shifted in the left direction by three pixels. In this case, the background image is viewed as if it is positioned ahead the screen.

When an L image is generated, plane shift is performed to shift coordinates of each pixel data in the right direction by three pixels. As a result, a no-pixel region L 1 having no pixel data is generated in a rectangle region at a left side edge of the L image.

Similarly, when an R image is generated, plane shift is performed to shift coordinates of each pixel data in the left direction by three pixels. As a result, a no-pixel region R1 having no pixel data is generated in a rectangle region at a right side edge of the R image.

Also, when the L image is generated, a region L2 is outside the background plane as a result of plane shift. Similarly, when the R image is generated, a region R2 is outside the background plane as a result of plane shift. The following describes how pixel data stored in the background plane moves as a result of plane shift.

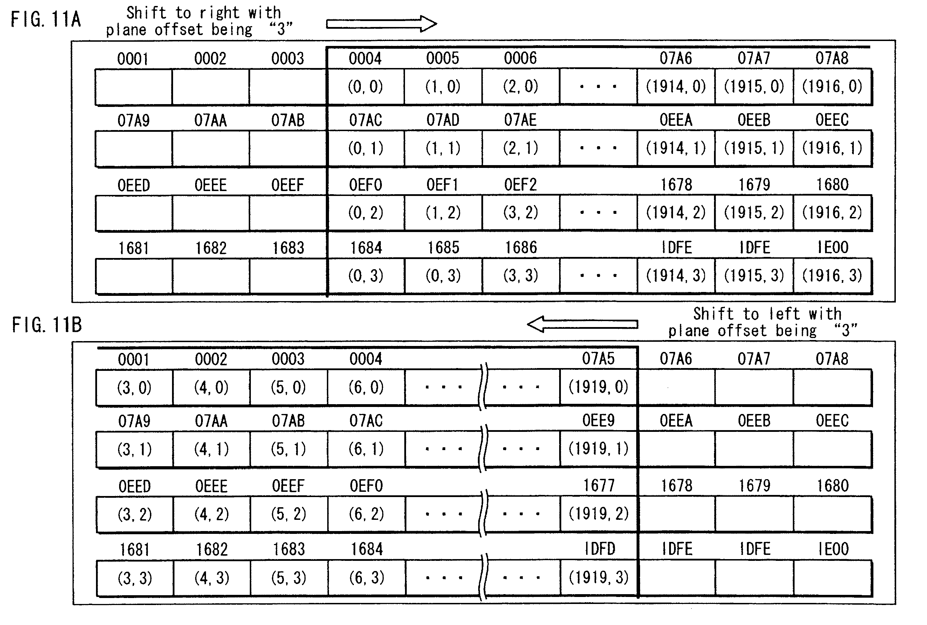

FIG.s 11A and 11B show data stored in the background plane on which plane shift has been performed. FIG. 11A shows the background plane after the coordinates of each of the pixel data pieces have been shifted in the right direction with the plane offset being 3. Since the plane offset is "3", the pixel data whose coordinates are (0, 0) in a background plane coordinate system is stored in a memory element whose address is 0004, pixel data whose coordinates are (1, 0) in the background plane coordinate system is stored in a memory element whose address is 0005, and pixel data whose coordinates are (2, 0) in the background plane coordinate system is stored in a storage element whose address is 0006.

Also, it can be seen that pixel data whose coordinates are (0, 1) in the background plane coordinate system is stored in a memory element whose address is 07AC, pixel data whose coordinates are (1, 1) in the background plane coordinate system is stored in a memory element whose address is 07AD, and pixel data whose coordinates are (2, 1) in the background plane coordinate system is stored in a memory element whose address is 07AE.

Also, shift by the number of pixels indicated by the plane offset shows that pixel data is not stored in the memory elements having the addresses 0001, 0002, and 0003, respectively.

Furthermore, shift by the number of pixels indicated by the plane offset shows that pixel data of coordinates corresponding to the region L2 is not stored in the plane.

FIG. 11B shows the background plane after the plane shift engine has shifted the coordinates of the pixel data pieces in the left direction with the plane offset being 3. Since the plane offset is "3", it can be seen that pixel data whose coordinates are (3, 0) in the background plane coordinate system is stored in a memory element whose address is 0001, pixel data whose coordinates are (4, 0) in the background plane coordinate system is stored in a memory element whose address is 0002, and pixel data whose coordinates are (5, 0) in the background plane coordinate system is stored in a memory element whose address is 0003.

Also, it can be seen that pixel data whose coordinates are (3, 1) in the background plane coordinate system is stored in a memory element whose address is 07A9, pixel data whose coordinates are (4, 1) in the background plane coordinate system is stored in a memory element whose address is 07AA, and pixel data whose coordinates are (5, 1) in the background plane coordinate system is stored in a memory element whose address is 07AB.

Also, shift by the number of pixels indicated by the plane offset shows that pixel data is not stored in the memory elements having the addresses 07A6, 07A7, and 07A8, respectively.

Furthermore, shift by the number of pixels indicated by the plane offset shows that pixel data of coordinates corresponding to the region R2 is not stored in the plane.

As described in the above, it can be seen that, in the background plane after the shifting has been performed, the coordinates of each of the pixel data pieces in the background plane are shifted to the right or left from the original coordinates of each of the pixel data pieces by the number of pixels shown by the plane offset.

Also, shift by the number of pixels indicated by the plane offset shows that a memory element having no pixel data is generated and pixel data of coordinates corresponding to the regions L2 and R2 is not stored in the plane.

In order to realize the shift in the background plane, the plane shift engine needs to shift the coordinates of each of the pixel data pieces composing the background data by changing, by an amount corresponding to a predetermined address, an address of a memory element at which each of the pieces of pixel data composing the background data is positioned. It is of course that the plane shift engine can realize the shift in the background plane without changing the address of the memory element on which each of the pixel data pieces is arranged, by performing processing equivalent to the above processing.

Returning to FIG. 9, the L image on which blank rendering processing has been performed is shown at the left side of the lower stage, and the R image on which blank rendering processing has been performed is shown at the right side of the lower stage. In the L image, an image of the region L2 that is outside the plane is pasted onto the no-pixel region L1. Similarly, in the R image, an image of the region R2 that is outside the plane is pasted onto the no-pixel region R1.

Parts of the background image (original image) are respectively pasted onto the no-pixel regions L1 and R1. Accordingly, although these regions L1 and R1 are not viewed as they are 3D, these regions are not displayed as black stripes but displayed as images similar to images of regions recognizable as 3D. This can reduce a viewer's unpleasant and uncomfortable feeling.

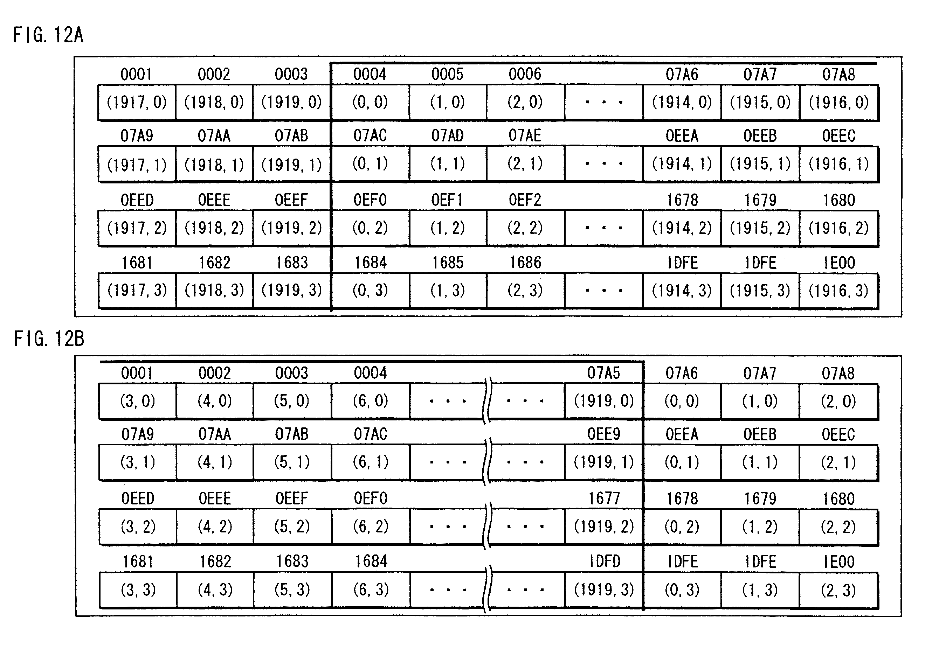

FIG. 12 shows data stored in the background plane on which blank rendering processing has been performed. In FIG. 12A, pixel data of coordinates (1917, 0), pixel data of coordinates (1918, 0), and pixel data of coordinates (1919, 0) of the background plane coordinates system are stored in memory elements of addresses 0001, 0002, and 0003, respectively.

Similarly, pixel data of coordinates of (1917, 1), pixel data of coordinates of (1918, 1), and pixel data of coordinates of (1919, 1) of the background plane coordinates system are stored in memory elements of addresses 07A9, 07AA, and 07AB, respectively.

In FIG. 12B, pixel data of coordinates of (0, 0), pixel data of coordinates of (1, 0), and pixel data of coordinates of (2, 0) of the background plane coordinates system are stored in memory elements of addresses 07A6, 07A7, and 07A8, respectively.

Similarly, pixel data of coordinates of (0, 1), pixel data of coordinates of (1, 1), and pixel data of coordinates of (2, 1) of the background plane coordinates system are stored in memory elements of addresses 0EEA, 0EEB, and 0EEC, respectively.

Note that a clip image selected for the L image and a clip image selected for the R image are not necessarily different from each other, and may be the same.

Furthermore, the size of the clip image is not necessarily equal to the size of the blank region. If the size of the clip image is not equal to the size of the blank region, scaling (enlargement or reduction) of the clip image may be performed, and then rendering may be performed on the clip image. Also, if the size of the clip image is smaller than the size of the blank region, it may be employed to perform tiled rendering on a plurality of clip images arranged in the blank region without changing the size of the clip image. A specific example in this case is described in the Modification Example 1-2 later. Furthermore, the blank rendering processing may be performed with any special effect such as sideway rotation, lengthways rotation, right and left reverse, up and down reverse, luminance adjustment, and contour adjustment. Alternatively, other method of specifying a clip image may be employed.

According to the present embodiment as described above, in order to realize stereoscopic playback of a background image in the playback apparatus 200, plane shift of the background plane is performed. A part of the original image 201 is written into a no-pixel region obtained as a result of plane shift of the background plane. Accordingly, even in the case where only the background image is displayed, for example in the case where playback of a video is stopped, when a viewer views the background image through liquid crystal glasses, stereoscopic effect is realized with respect to a common rendering region in which common rendering is performed between an L image and an R image. Furthermore, the part of the original image 210 is written in to the no-pixel region, and as a result the viewer recognizes the part of the original image 201 written into the no-pixel region on both sides of the screen. Since the part of the original image 201 is similar to an image of the common rendering region in which the stereoscopic effect can be realized, the viewer can view the background image with not so much unpleasant and uncomfortable feeling. This is especially effective in the case where the background image is a pattern image as shown in the present embodiment.

### (Modification Example 1-1)

In the above embodiment, a region that is outside the background plane due to plane shift has been used as a partial region relating to the background plane. The following describes a modification example where the partial region is replaced with a region adjacent to a blank region.

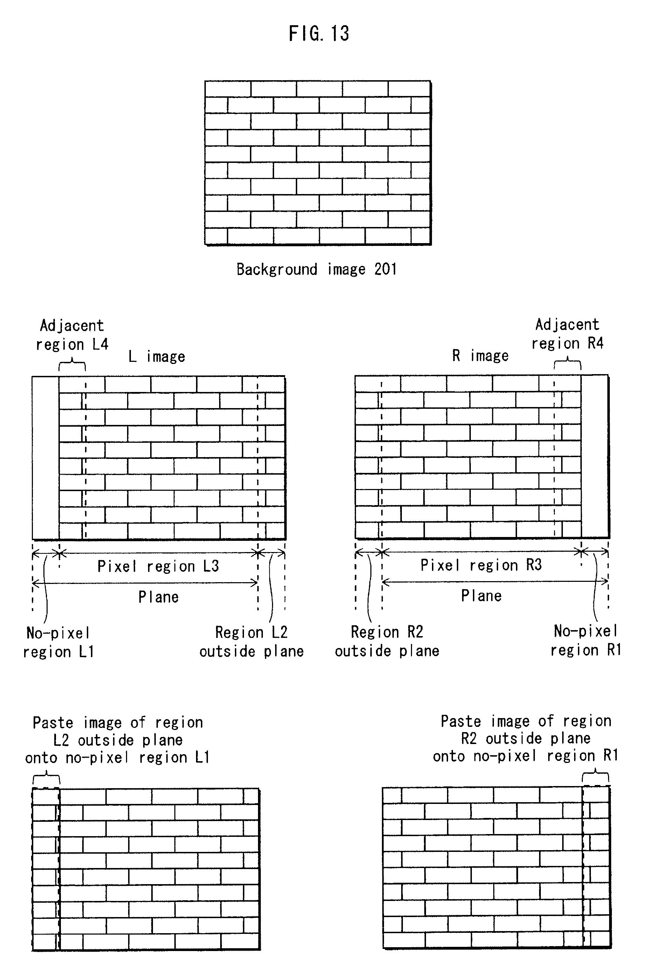

FIG. 13 shows a specific example of the Modification Example 1-1. In FIG. 13, the upper stage shows the background image 201 rendered on the background plane. This image is the same as the image shown on the upper stage in FIG. 9.

In FIG. 13, an L image is shown at the left side of the middle stage, an R image is shown at the right side of the middle stage. These images are the same as those shown on the middle stage in FIG. 9. Here, a region adjacent to the no-pixel region L1 is referred to as an "adjacent region L4" in the L image. Similarly, a region adjacent to the no-pixel region R1 is referred to as an "adjacent region R4" in the R image.

In FIG. 13, the L image on which blank rendering processing has been performed is shown at the left side of the lower stage, and the R image on which blank rendering processing has been performed is shown at the right side of the lower stage. In the L image, an image of the region L4 is copied and pasted onto the no-pixel region L1 adjacent to the region L4. In the R image, an image of the adjacent region R4 is copied and pasted onto the no-pixel region R1.

In this way, by copying an image of a region adjacent to a no-pixel region and pasting the copied image onto the no-pixel region, although the no-pixel region is not viewed as 3D on the screen, an image similar to an image of a region recognizable as 3D is displayed. This can reduce a viewer's unpleasant and uncomfortable feeling.

### (Modification Example 1-2)

Next, the following describes a modification example where a partial region relating to the background plane is replaced with a region specified by an application.

In this case, information of the region to be specified is recorded in a BD-J application, which is supplied from the virtual file system 25 and is executed within the BD-J module. The BD-J application specifies a region to be used for blank rendering processing, via the rendering engine 22b.

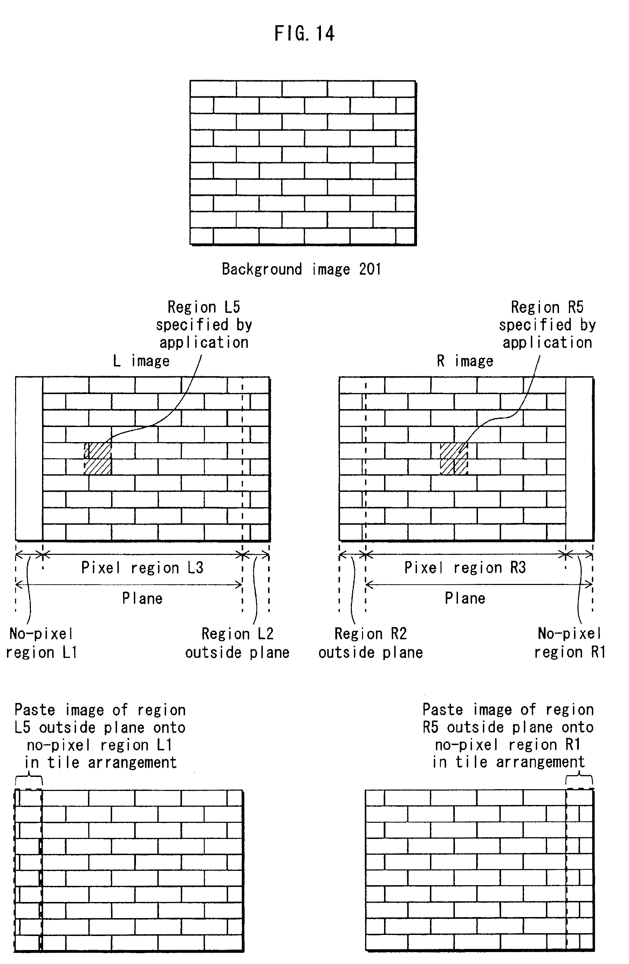

FIG. 14 shows a specific example of the Modification Example 1-2. In FIG. 14, the upper stage shows the background image 201 rendered on the background plane. This image is the same as the image shown on the upper stage in FIG. 9.

In FIG. 14, an L image is shown at the left side of the middle stage, and an R image is shown at the right side of the middle stage. These images are the same as those shown on the middle stage in FIG. 9. Here, the L image includes a region L5 specified by the BD-J application. Similarly, the R image includes a region R5 specified by the BD-J application.

In FIG. 13, the L image on which blank rendering processing has been performed is shown at the left side of the lower stage, and the R image on which blank rendering processing has been performed is shown at the right side of the lower stage. In the L image, a plurality of images of the region L5 are pasted onto the no-pixel region L1 in the tile arrangement. In the R image, a plurality of images of the region R5 are pasted onto the no-pixel region R1 in the tile arrangement.

In this way, even if the size of the blank region is not equal to the size of the region specified by the BD-J application, it is possible to reduce a viewer's unpleasant and uncomfortable feeling by pasting a plurality of images of the region in the tile arrangement.

### (Second Embodiment)

In the first embodiment, the viewer's unpleasant and uncomfortable feeling is reduced by pasting part of a background image (original image) onto a no-pixel region. In the second embodiment, the viewer's unpleasant and uncomfortable feeling is reduced by filling the no-pixel region using a certain color during plane shift.

### <Blank Rendering Processing>

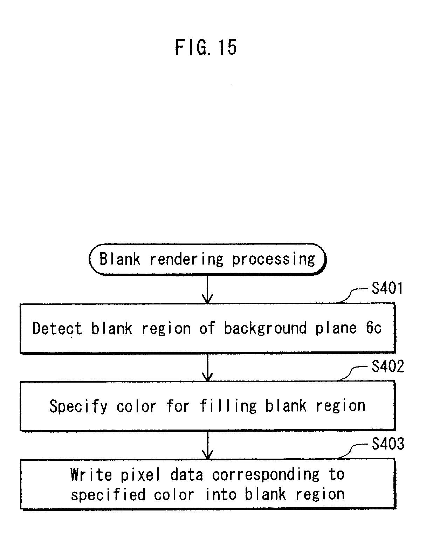

FIG. 15 is a flow chart showing blank rendering processing performed by the rendering engine 22b according to the second embodiment.

Firstly, the rendering engine 22b detects a blank region included in a storage region of background data in the background plane 6c (Step S401).

Next, the rendering engine 22b specifies a color for filling the blank region (Step S402). Here, the color for filling the blank region is generated using pixel data stored in the background plane 6c. The color for specifying the blank region is, for example, an average color of colors corresponding to pieces of pixel data in vertical pixel line adjacent to a no-pixel region.

The rendering engine 22b writes pixel data showing the specified color into the detected blank region (Step S403).

This generates a background plane to be overlaid with a video plane or the like.

### <Specific Example>

The following describes plane shift and blank rendering processing with use of a specific example.

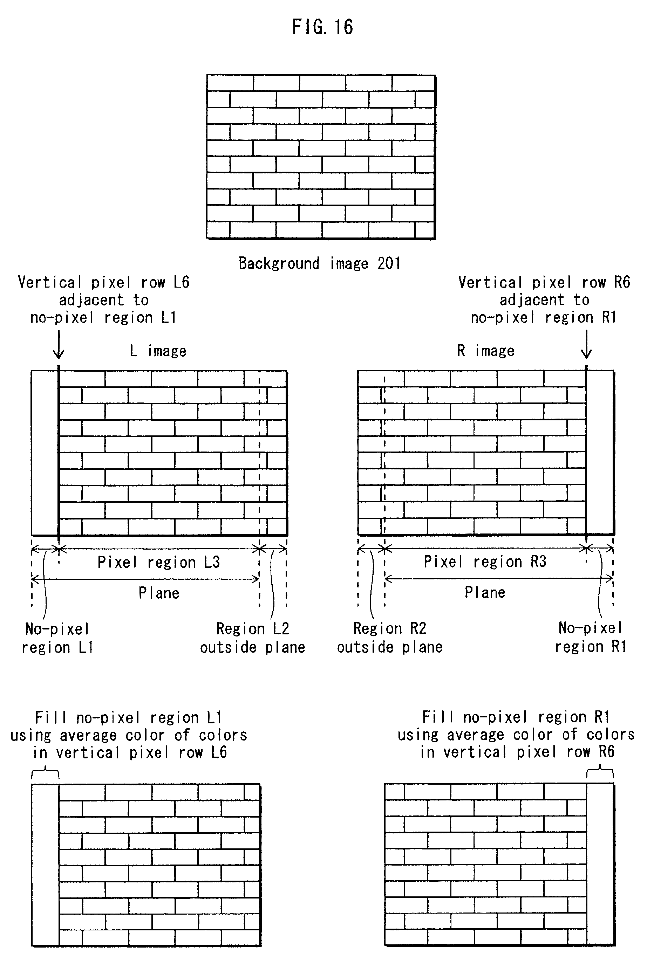

FIG. 16 shows a specific example of plane shift and blank rendering processing according to the second embodiment. In FIG. 16, the upper stage shows the background image 201 rendered on the background plane.

In FIG. 16, an L image is shown at the left side of the middle stage, and an R image is shown at the right side of the middle stage. These images are the same as those shown on the middle stage in FIG. 9. Here, the L image includes a vertical pixel line L6 adjacent to the no-pixel region L1 . Similarly, the R image includes a vertical pixel line R6 adjacent to the no-pixel region R1.

Color settings are expressed in a group composed of three numeric values (R, G, and B). The number of pixels in the vertical direction of the plane is expressed as "ymax". When a color of pixels set for a Y coordinate "y" on the vertical pixel line L6 of the background plane is expressed in (R[y], G[y], and B[y]), a color to be specified for the blank region is calculated as follows. The same calculation is applied to the horizontal pixel line R6.
(Ra, Ga, and Ra)
Ra: (total of R[0] to R[ymax-1])/ymax
Ga: (total of G[0] to G[ymax-1])/ymax
Ba: (total of B[0] to B[ymax-1])/ymax
The calculation method described here is of course one example, and another calculation method may be employed. It is only necessary to calculate color information indicating a color of the background data, based on at least one of pieces information respectively indicating luminance, color phase, brightness, and chroma of the background data.

Also, it may be employed to calculate a color using pixel data stored in the image plane that is other than pixel data in a vertical pixel line adjacent to the no-pixel region. Alternatively, it may be employed to acquire information from other plane such as the video plane instead of the image plane.

Returning to FIG. 16, an L image on which the blank rendering processing has been performed is shown at the left side of the lower stage, and an R image on which the blank rendering processing has been performed is shown at the right side of the lower stage. In the L image, the no-pixel region L1 is filled with an average color of colors of the vertical pixel line L6. In the R image, the no-pixel region R1 is filled with an average color of colors of the vertical pixel line R6.

The no-pixel regions L1 and R1 are each filled with an average color of colors of the vertical pixel line, and as a result, a color similar to a color of an interface with a region recognizable as 3D is displayed in the region on the screen. Accordingly, the region is extremely similar to the region recognizable as 3D, and is not so outstanding. This can reduce a viewer's unpleasant and uncomfortable feeling.

Note that a color specified for the L image and a color specified for the R image are not necessarily different from each other, and may be the same.

According to the second embodiment as described above, pixel data indicating an average color in a vertical pixel line adjacent to a no-pixel region is written into a no-pixel region obtained as a result of plane shift of the background plane. Accordingly, even in the case where only a background image is displayed, for example in the case where playback of a video is stopped, when a viewer views the background image through liquid crystal glasses, stereoscopic effect is realized with respect to a common rendering region in which common rendering is performed between an L image and an R image. Furthermore, the no-pixel region is filled using an average color in the vertical pixel line adjacent to the no-pixel region, and as a result the viewer recognizes the region in which the average color is filled on both sides of the screen. Since the average color in the vertical pixel line is similar to a color of an interface of the common rendering region in which the stereoscopic effect can be realized, the viewer can view the background image with not so much unpleasant and uncomfortable feeling.

Note that a color to be used for rendering the blank region is an average color in a vertical pixel lines adjacent to the no-pixel region. Alternatively, even by using a color similar to an ambient color (for example, a color of a frame of the TV 400) outside the screen, it is possible to reduce the viewer's unpleasant and uncomfortable feeling.

### (Modification Example 2-1)

In the above embodiment, as a color to be used for filling a blank region, an average color of colors respectively corresponding to pieces of pixel data of a vertical pixel line adjacent to the no-pixel region has been used. The following describes a modification example where a color to be used for filling a blank region is replaced with a color specified by a user.

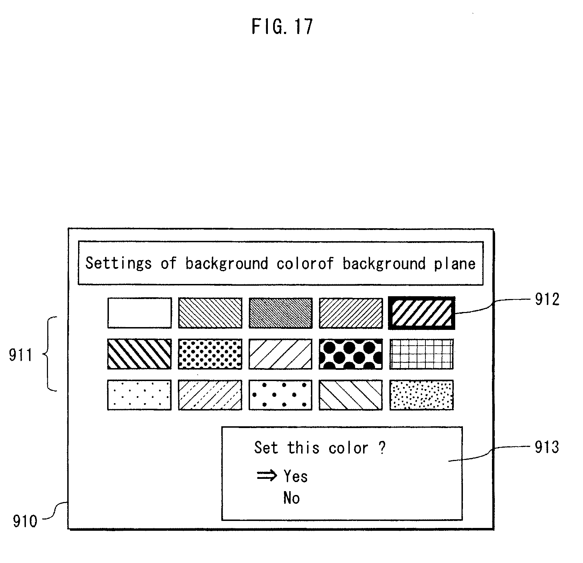

FIG. 17 shows an interactive user interface 901 for specifying a color. The interactive user interface 901 presents options 911 that are options of colors to be set, and moves a focus 912 in response to an input via a remote controller, and then finally causes a user to determine a color to be specified using an interactive selection check display 913.

The means for causing a user to specify a color is of course not limited to this. Alternatively, other means may realize this function.

A blank region is filled with a color specified by the user interface 901.

The user interface 901 may be displayed together with a menu in accordance with a timing when the menu is displayed. Alternatively, the user interface 901 may be displayed in accordance with a timing when playback of a video is stopped, or may be displayed in accordance with a user's operation.

As a result, a viewer specifies a bright color in the case where room lighting is bright, or specifies a color suitable for a color of a wallpaper of a room. This can reduce the viewer's unpleasant and uncomfortable feeling due to stereoscopic viewing.

### (Modification Example 2-2)

The following describes a modification example where a color for filling a blank region is replaced with a color specified by an application.

In this case, color information indicating a color to be specified is recorded in a BD-J application, which is supplied from the virtual file system 25 and is executed within the BD-J module. The BD-J application specifies a color for filling the blank region in the background plane via the rendering engine 22b, and the blank region is filled with this specified color.

### (Third Embodiment)

In the third embodiment, a supplementary image to be pasted onto a blank region is prepared beforehand. When a blank region is generated, the supplementary image is pasted onto the blank region. This reduces a viewer's unpleasant and uncomfortable feeling.

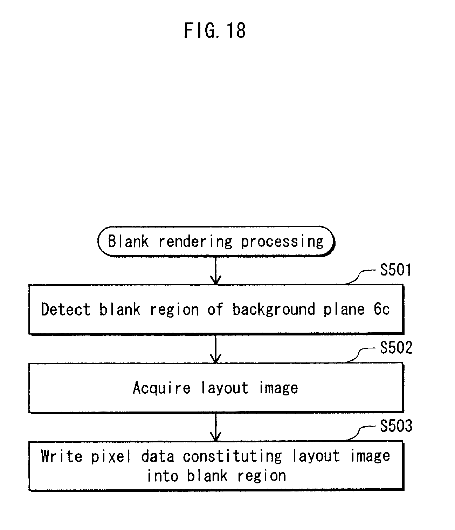

FIG. 18 is a flow chart showing blank rendering processing performed by the rendering engine 22b according to the third embodiment.

Firstly, the rendering engine 22b detects a blank region included in storage regions of the background plane of storing therein background data (Step S501).

Next, the rendering engine 22b acquires a supplementary image to be rendered on the blank region (Step S502). Here, the supplementary image is stored beforehand in the local storage 24 or the removable medium 27, and desirably reduces a viewer's unpleasant and uncomfortable feeling caused due to pasting of the supplementary image onto the blank region.

The rendering engine 22b writes pixel data constituting the acquired supplementary image into the detected blank region (Step S503). This generates a background plane to be overlaid with the video plane or the like.

Next, plane shift and blank rendering processing are described using a specific example.

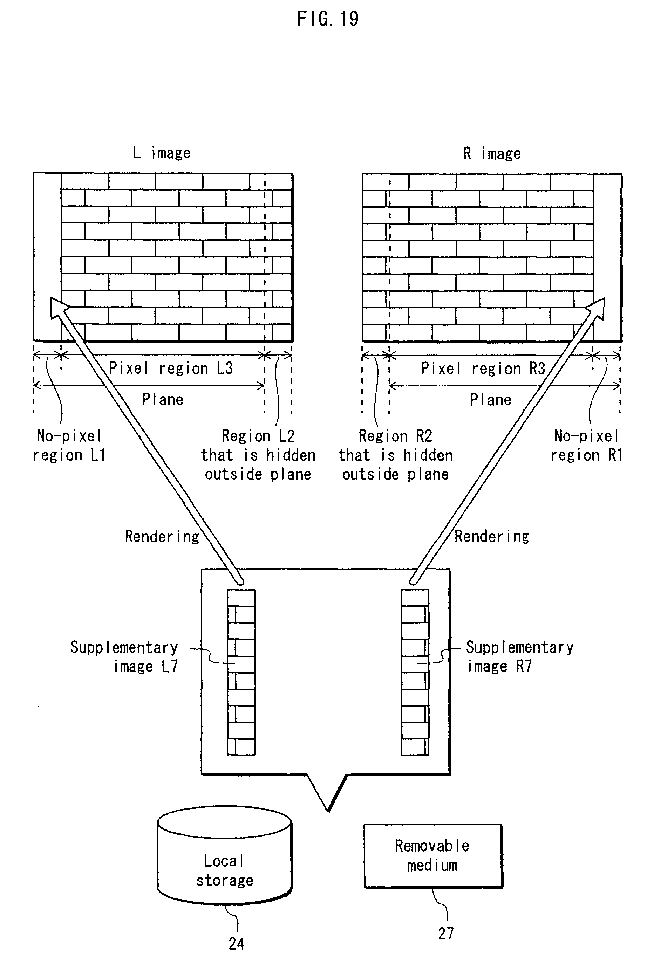

FIG. 19 shows a specific example of plane shift and blank rendering processing according to the third embodiment. In FIG. 19, an L image is shown at the left side of the upper stage, and an R image is shown at the right side of the upper stage. These images are the same as the images shown on the middle stage in FIG. 9.

In FIG. 19, the left side of the lower stage shows supplementary images L7 and R7 stored in the local storage 24 or the removable medium 27. Here, the supplementary images L7 and R7 are similar to images of the pixel regions L3 and R3, respectively.

The supplementary image L7 is pasted onto a no-pixel region L1 of the L image, and the supplementary image R7 is pasted onto a no-pixel region R1 of the R image.

Since the supplementary images L7 and R7 are pasted onto the no-pixel regions L1 and R1 respectively, an image similar to an image of a region recognizable as 3D is displayed on the screen. As a result, the displayed region is extremely similar to the region recognizable as 3D, and is not so outstanding. This can reduce a viewer's unpleasant and uncomfortable feeling.

Note that a supplementary image specified for the L image and a supplementary image specified for the R image are not necessarily different from each other. Alternatively, the same supplementary image may be pasted onto a no-pixel region of each of the L image and the R image.

Also, the size of the supplementary image is not necessarily equal to the size of the blank region. If the size of the supplementary image is not equal to the size of the blank region, scaling (enlargement or reduction) of the supplementary image may be performed, and then rendering may be performed on the supplementary image. Also, if the size of the supplementary image is smaller than the size of the blank region, it may be employed to perform tiled rendering a plurality of supplementary images on the blank region without changing the size of the supplementary image. Furthermore, the rendering processing may be performed with any special effect such as sideway rotation, lengthways rotation, right and left reverse, up and down reverse, luminance adjustment, and contour adjustment.

According to the third embodiment as described above, a supplementary image is pasted onto a no-pixel region obtained as a result of plane sift in the background plane. Accordingly, even in the case where only a background image is displayed, for example in the case where playback of a video is stopped, when a viewer views the background image through liquid crystal glasses, stereoscopic effect is realized with respect to a common rendering region in which common rendering is performed between an L image and an R image. Furthermore, the supplementary image is pasted onto the no-pixel region, and as a result the viewer recognizes the supplementary image on both sides of the screen. Since the supplementary image is similar to an image of the common rendering region in which the stereoscopic effect can be realized, the viewer can view the background image with not so much unpleasant and uncomfortable feeling.

### (Modification Example 3-1)

In the above embodiment, a supplementary image stored beforehand in the local storage 24 or the removable medium 27 has been used. The following describes a modification example where the above supplementary image is replaced with a supplementary image specified by an application.

In this case, a BD-J application is supplied from the virtual file system 25, and is executed within the BD-J module 15. Specification of a supplementary image is recorded in the BD-J application. The BD-J application specifies a supplementary image to be used for performing blank rendering processing among one or more supplementary images stored beforehand, via the rendering engine 22b.

### <Supplementary Explanations>

Although the playback apparatus relating to the present invention has been described based on the above embodiments, the present invention is of course not to limited to the above embodiments.
(1) In the above embodiments, the descriptions have been given based on the assumption that each of the playback apparatus 200 for playing back a video and the display 400 for displaying the video is implemented by a different apparatus. Alternatively, the playback apparatus 200 and the display 400 may be implemented by the same apparatus for playing back and displaying a video.
(2) In the above embodiments, the descriptions have been given based on the assumption that stereoscopic viewing is realized using the shutter glasses 500. Alternatively, it may be possible to use another method for causing a left eye and a right eye to view an L image and an R image, respectively. For example, it may be employed to use a system that does not use special viewing equipments such as glasses but lenticular lenses for a screen, the side-by-side method, and so on.
(3) The playback apparatus may have the structure in which a pair of a video decoder and a video plane is included. The playback apparatus outputs stereoscopic data by alternately performing processing for left eye video and processing for right eye video. With such a structure, an advantage is achieved that it is possible to suppress a necessary calculation amount of an apparatus having poor apparatus resources relating to a memory and graphics (for example, CE apparatus).
(4) In the above embodiments, in the case of L image, plane shift is performed on the background plane by a value stored in the image shift amount register. In the case of R image, plane shift is performed on the background plane by the same value in the opposite direction. Alternatively, another method may be employed. For example, in the case of L image, plane shift may not be performed on the background plane. Only in the case of R image, plane shift may be performed on the background plane by a value stored in the image shift amount register. Further alternatively, only in the case of L image, plane shift may be performed on the background plane by a value stored in the image shift amount register. In the case of R image, plane shift may not be performed on the background plane. Any method causes the parallax between the L image and the R image due to the plane shift, by an amount proportional to the value registered in the image shift amount register.
(5) The above embodiments have described, using the example of the background plane, the method of reducing the viewer's unpleasant and uncomfortable feeling due to plane shift. The present invention is also applicable to a presentation graphics plane and an interactive graphics plane.
(6) In the case of playback of BD-ROMs, it is possible to perform scaling display (reduced display) of a video. In the case where scaling is performed on a stereoscopic video using the background plane and the stereoscopic video is displayed as an overlaid image on an image for example, if plane shift is performed on the overlaid image, a blank region is generated in the same way as the case without scaling. In this case, with respect to both edges of the inlaid images, one of the inlaid images for left eye and right eye is a no-pixel region, and the other is a region in which some rendering is performed. Therefore, the present invention is also applicable to an inlaid image on which scaling has been performed.

It may of course be possible to reduce the viewer's uncomfortable feeling by forcibly performing 2D display to stop 3D display during scaling.
(7) In the above embodiments, plane shift is realized by shifting content in each memory element in the plane memory. Alternately, the following improvement may be performed when the pixel data pieces stored in the plane memory is read by the composition unit 10 in units of lines. In a pixel data aggregate with a resolution of 1920 × 1080 or 1280 × 720, a line (i.e. a group of 1920 horizontal pixels or a group of 1280 horizontal pixels) is referred to as line data.

The composition unit 10 composites line data read respectively from each of the video plane 4c, the background plane 6c, the presentation graphics plane 5f, and the interactive graphics plane 8.

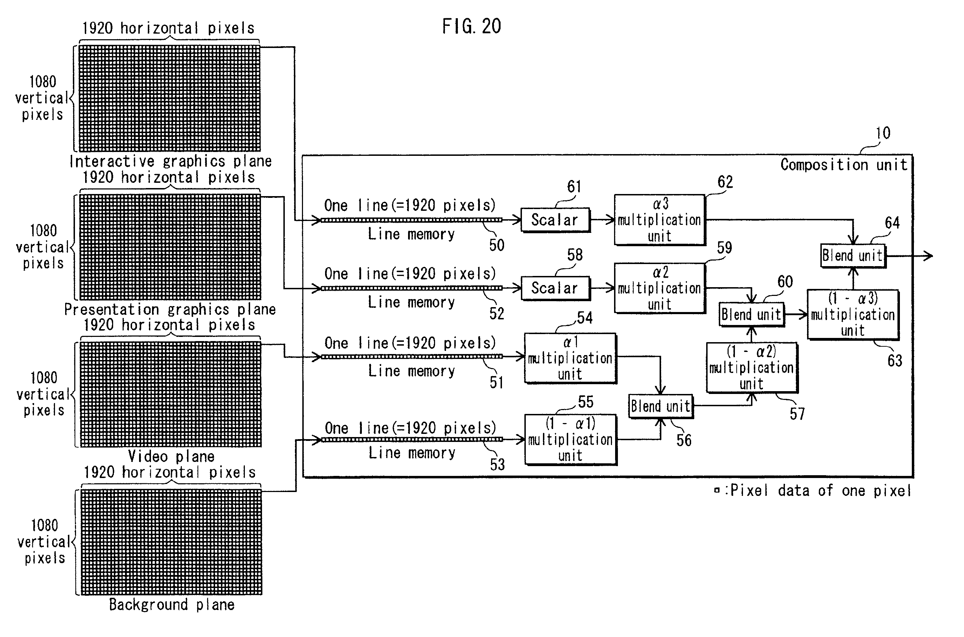

FIG. 20 shows a structure of the composition unit 10. As shown in FIG. 20, the composition unit 10 is composed of line memories 50 to 53, an α1 multiplication unit 54, a (1-α1) multiplication unit 55, a blend unit 56, a (1-α2) multiplication unit 57, a scalar 58, an α2 multiplication unit 59, a blend unit 60, a scalar 61, an α3 multiplication unit 62, a (1-α3) multiplication unit 63, and a blend unit 64.

The line memory 50 stores therein the line data read from the interactive graphics plane 8.

The line memory 51 stores therein the line data read from the presentation graphics plane 5f.

The line memory 52 stores therein the line data read from the video plane 4c.

The line memory 53 stores therein the line data read from the background plane 6c.

The α1 multiplication unit 54 multiplies, by a transmittance α1, brightness of the line data composing pictures stored in the line memory 51.

The (1-α1) multiplication unit 55 multiplies, by a transmittance (1-α1), brightness of the line data composing the graphics data stored in the line memory 53.

The blend unit 56 blends the line data whose pixels each is multiplied by the transmittance α1 by the α1 multiplication unit 54 with the line data whose pixels each is multiplied by the transmittance (1-α1) by the (1-α1) multiplication unit 55.

The (1-α2) multiplication unit 57 multiplies the output from the blend unit 56 by the transmittance (1-α2).

The scalar 58 enlarges the line data read from the line memory 52.

The α2 multiplication unit 59 multiplies, by the transmittance α2, brightness of the line data composing the picture enlarged by the scalar 58.

The blend unit 60 blends the line data multiplied by the transmittance α2 with the line data whose pixels each is multiplied by the transmittance (1-α2) by the (1-α2) multiplication unit 57.

The scalar 61 enlarges the line data read from the line memory 50.

The α3 multiplication unit 62 multiplies, by the transmittance α3, brightness of the line data that is read by the line memory 50, and composes the graphics enlarged by the scalar 61.

The (1-α3) multiplication unit 63 multiplies, by the transmittance (1-α3), brightness of the line data that is an output result obtained from the blend unit 60.

The blend unit 64 blends the line data pieces each multiplied by the transmittance α3 with the line data whose pixels each is multiplied by the transmittance (1-α3) by the (1-α3) multiplication unit 63.

This concludes the description of the structure of the composition unit 10.

The plane shift engine 9a described in the above embodiments realizes transfer processing of: reading pixel data pieces in units of lines from memory elements in the interactive graphics plane and the presentation graphics plane, and storing the pixel data pieces in a corresponding one of the line memories. In this transfer processing, it is possible to realize processing that is equivalent to the shifting of coordinates of each of the pixel data pieces stored in the memory elements as described in the above embodiments by changing the addresses of the line memories to which the pixel data pieces are transferred. The same applies to the plane shift engine 9b.

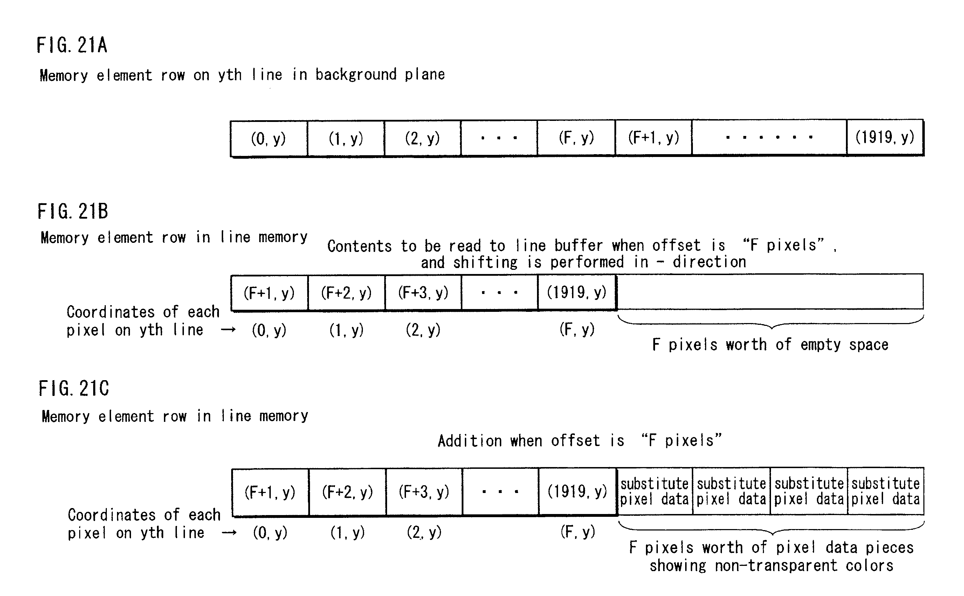

FIG. 21A to FIG. 21C show processes of performing plane shift in the left direction for each line data. FIG. 21A shows pixel data pieces on the y^{th} line that exist in the background plane. FIG. 21B shows pixel data pieces on the y^{th} line stored in the line memory. As shown in FIG. 21B, if the plane offset is F pixels, it can be seen that pixel data pieces on the y^{th} line at coordinates (F + 1, y) to (1919, 0) are stored. Also, it can be seen that an empty space corresponding to F pixels exists on the right end of a memory element string in the line memory.

FIG. µ21 C shows that non-transparent pixel data pieces are added. It can be seen that the non-transparent pixel data pieces are added in an empty space corresponding to F pixels. These non-transparent pixel data pieces are as described in the above embodiments, and are pixel data pieces indicating a predetermined color, for example.

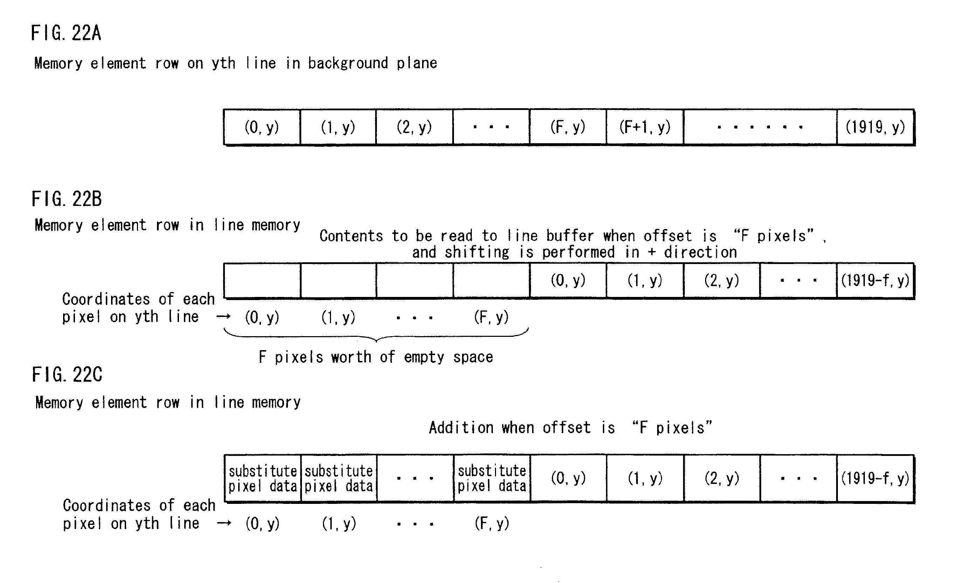

FIG. 22A to FIG. 22C show processes for performing plane shift in the right direction for each of line data pieces. FIG. 22A shows pixel data pieces on the y^{th} line stored in the background plane. FIG. 22B shows pixel data pieces on the y^{th} line read to the line memory. As shown in FIG. 22B, if the plane offset is F pixels, it can be seen that pixel data pieces on the y^{th} line at coordinates (0, y) to (1919 - F, 0) are stored. Also, it can be seen that empty space corresponding to F pixels exists on the left end of a memory element string in the line memory.

FIG. 22C shows that non-transparent pixel data pieces are added. It can be seen that the non-transparent pixel data pieces are added in the empty space corresponding to F pixels.

This concludes the description of processes for performing plane shift for each line data pieces.

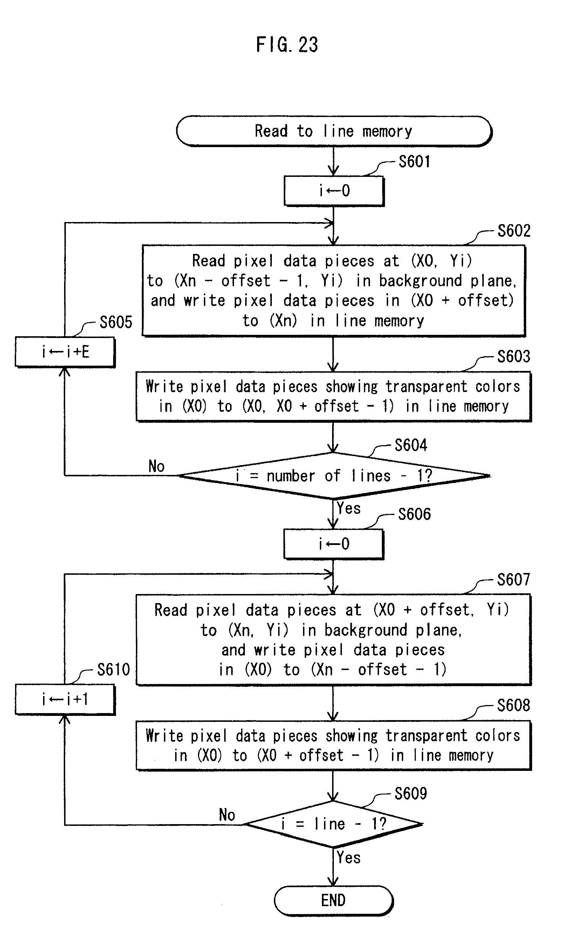

The plane shift engine 9b that performs plane shift for each line data pieces can be implemented by creating a program that causes the CPU to execute the processing procedures shown in a flowchart of FIG. 23, and installing the program in the playback apparatus 200. The following describes the implementation of the plane shift engine 9b by software.

FIG. 23 is a flow chart showing processing procedures for reading pixel data pieces to the line memory.

Processing from Step S601 to Step S605 has a loop configuration that repeats Step S602 to Step S605 after a parameter i is set to 0 in Step S601. This loop ends under a condition that the parameter i becomes a value (the number of lines - 1). As long as it is judged that the parameter i is not a value (the number of lines - 1) in Step S604, the parameter i is incremented, and Step S602 to Step S605 are repeated. In Step S602, the plane shift engine reads pixel data pieces (X0, Yi) to (Xn - plane offset - 1, Yi) in the background plane, and writes the pixel data pieces in (X0 + plane offset) to (Xn). In Step S603, the plane shift engine writes non-transparent pixel data pieces in (X0) to (X0 + offset - 1) in the line memory.

Processing from Steps S606 to S610 0 has a loop configuration that repeats Steps S607 to S610 after a parameter i is set to 0 in Step S606. This loop ends under a condition that the parameter i becomes a value (the number of lines - 1) in Step S609. As long as it is judged that the parameter i is not the value (the number of lines - 1) in Step S609, the parameter i is incremented, and processing in Steps S607 to S610 is repeated. In Step S607, the plane shift engine reads pixel data pieces (X0 + plane offset, Yi) to (Xn, Yi) in the background plane, and writes the pixel data pieces in (X0) to (Xn - plane offset -I). In Step S608, the plane shift engine writes non-transparent pixel data pieces in (X0) to (X0 + plane offset - 1) in the line memory.

This completes the description of the process of performing plane shift in the left direction for each line data.

As described above, when pixel data stored in the background plane is read for each line, shift in the right direction and shift in the left direction in the line memory are realized. As a result, the memory access to the background plane can be less frequent. The same applies to the plane shift engine 9a.

Further improvements and variations relating to the following technical topics can be added. Whether to carry out the invention as indicated in the embodiments or to use these improvements and variations is arbitrary, and is left to the discretion of the one who carries out the invention.

### (Implementation as Recording Medium)

The playback apparatus 200 includes the local storage 24 and the removable medium 27. Since the playback apparatus 200 is expected to write data in the local storage 24 and the removable medium 27, the playback apparatus described in the present Description has a function as a recording medium. When the playback apparatus 200 functions as the recording medium, the playback apparatus 200 writes a management object in the following two manners (1) and (2).

(1) When the playback apparatus 200 has a function of playing back a virtual package, the playback apparatus 200 writes a BD-J object in the following way. That is, when the BD-ROM is loaded, the playback apparatus 200 acquires an additional content corresponding to the BD-ROM from a WWW server via the network in accordance with a request from an application. The acquired additional contents include a BD-J object in which a GUI management table is written. The "GUI management table" is a management table to be used by an application in operation for performing GUI. The GUI management table includes a resolution in GUI display, font data to be used for GUI, and a mask flag that stipulates whether a menu call for GUI and a title call performed by a user is to be masked or not.

A control unit for performing recording control, which is included in the playback apparatus 200 writes the acquired BD-J object into the local storage in accordance with a request from the application. Thus, it is possible to configure the virtual package by combining the contents recorded in the BD-ROM with the additional contents recorded in the local storage.

In the BD-ROM, an identifier of a disc root certificate, an identifier of an organization that supplies the BD-ROM contents, and an identifier of the BD-ROM are recorded. An area in which the additional contents need to be stored is specified by a file path including the identifier of the disc root certificate, the identifier of the organization, and the identifier of the BD-ROM.

The application performs writing by sending, to the control unit, a file path that specifies the area in which the additional contents need to be stored.

When the local storage has a file system that limits the names of directories and files each to have 255 characters or less, the file path used for writing into the local storage includes file names and extensions in a 8.3-format file system in which directory names each have eight characters or less and file names and extension names each have three characters or less.

(2) If the playback apparatus 200 has a function of receiving the BD-J object from an on-demand manufacture service or an electrical sell-through services (MODEST), the playback apparatus 200 writes the BD-J object as follows.

That is, when the playback apparatus 200 receives the BD-J object from an on-demand manufacture service or an electrical sell-through services (MODEST), the playback apparatus 200 creates a default directory and a MODEST directory under the root directory in a removable medium, and creates the BDMV directory under the MODEST directory. The MODEST directory is a first MODEST directory. The first MODEST directory is created when the user receives the service for the first time. When the user receives the service for the second time onwards, the control unit included in the playback apparatus 200 creates a MODEST directory corresponding to a service from the second time onwards.

As described in the above, after acquiring the BD-J object in which the GUI management table is written, the control unit writes a start-up program into the default directory, and writes the BD-J object in the BDMV directory under the MODEST directory. This start-up program is a program to be executed first when the recording medium is loaded in the playback apparatus 200. The start-up program causes the playback apparatus 200 to display a menu from which user operation of selecting the BDMV directory is received, and to execute a root change function. This root change function is a function of causing the MODEST directory to which the BDMV directory belongs to be recognized as the root directory when the user performs the selection operation on the menu. The root change function makes it possible to execute the playback control based on the acquired BD-J object by the same control procedures as the control procedures for playing back the BD-ROM.

### <Java™ Application>

The BD-J application may be, for example, an Electronic Commerce (EC) client application, or may be an online game played against opponents on the Internet. Furthermore, by working together with a search engine, various online services can be provided to the user.

### <Units for Integrating GUI Table>

The GUI management table may be provided in the BD-J object. Th e GUI management table may be provided so as to correlate with PlayList information and PlayItem information, and so that when the current PlayList becomes the current PlayItem or when the current PlayItem becomes the specified PlayItem, the plane memory is released, and plane memories for stereoscopic playback and for planar playback may be reserved. This enables the area of the memory element to be managed with more precise time accuracy.

### <Video Stream for Stereoscopic Viewing>

Recording left view and right view video streams on a BD-ROM is only one example. Playback may also be performed by recording a video stream indicating depth values per pixel on the BD-ROM, for each picture, as an EnhancedView video stream.

### <Package to be Implemented>

When implementing a playback apparatus, the following BD-J Extensions are preferably implemented in the playback apparatus. The BD-J Extensions include various packages that have been specialized for providing functions exceeding GEM [1.0.2] to a Java™ format. Packages provided by the BD-J Extensions are as follows.

### org.bluray.media

This package provides specialized functions to be added to the Java™ Media FrameWork. Control for angles, audio, and subtitle selection are added to the package.

### org.bluray.ti

This package includes an AP1 for operating by mapping "services" to "titles" according to GEM [1.0.2], a mechanism for inquiring for title information from a BD-ROM, and a mechanism for selecting a new title.

### org.bluray.application

This package includes an API for managing life cycles of applications. Also, this package includes an API for inquiring for necessary information for signaling when executing applications.

### org.bluray.ui

This package includes a class that defines a constant number for key events specialized in the BD-ROM, and realizes synchronization with playback of a video.

### org.bluray.vfs

This package provides a Binding Scheme for binding contents that are recorded in the BD-ROM (on-disk contents) and contents in the Local Storage that are not recorded on the BD-ROM (off-disk contents) and playing back the contents seamlessly, regardless of the location of the contents.

The Binding Scheme correlates contents recorded in the BD-ROM (AV clips, subtitles, BD-J applications) with related contents in the Local Storage. This Binding Scheme realizes seamless playback regardless of the location of the contents.

### <Structure of Plane>

When the presentation graphics plane 5f, the interactive graphics plane 8, and the background plane 6c are each composed of an SDRAM, a unique control for shifting the coordinates of the pixel data pieces stored in the SDRAM is necessary.

The SDRAM includes a ROW address decoder that outputs a ROW address output at time-divided address pins to a memory array, a COLUMN address decoder that outputs a COLUMN address output at time-divided address pins to a memory array, a page data buffer that stores therein one page length worth of data read from the memory array, and outputs the one page length worth of data at the address pins, and a word length register that designates a word length to be burst-read to the page data buffer. Since the SDRAM uses a condenser as a memory element, natural discharge occurs. For this reason, it is necessary in the SDRAM to perform refresh on the memory element, and additional circuits must be added for performing the refresh.

When a picture is stored in the SDRAM, plane shift is performed by combining the states of RAS, CAS, WE, CS, and CKE to create a command, and performing reading/writing. For example, when a burst transfer mode is used, an activated command is issued, and a ROW address is issued at the address pin of the SDRAM. After a predetermined period delay from the issue, a READ command is issued, and the COLUMN address is issued at the address pin.

### (Programming Language Application Range)

It is described in the above embodiments that the Java™ language is used as the virtual machine programming language. However, the language is not limited to Java™, and other programming languages, such as B-Shell, Perl Script, and ECMA Script, which are used in the UNIX™ OS, and the like, may also be used.

### (Change to Multidrive)

The above embodiments have described a BD-ROM as an example of a recording medium, and a BD-ROM drive as an example of a specific means having a function of reading data from the BD-ROM. However, a BD-ROM is merely one example. When an optical disk medium such as a BD-R, a BD-RE, a DVD, and a CD is used as the recording medium, it is also possible to perform the operations described in the above embodiments as long as data having the above-described data structure is recorded in such a recording medium and a drive device capable of reading such a recording medium is prepared.

The recording media of the above embodiments include all types of package media such as optical disks, semi-conductor memory cards, etc. In the above embodiments, the recording medium is, as an example, an optical disk (for example, a available read-only optical disk such as a BD-ROM or a DVD-ROM). However, the present invention is not limited to this. For example, it is possible to implement the present invention by writing 3D contents, including data necessary for implementing the present invention and has been broadcast or distributed over a network, with use of a terminal device fulfilling a function of writing 3D contents (for example, the function may be included in the playback apparatus, or may be included in an apparatus other than the playback apparatus), on a writable optical disk (for example, an available writable optical disk such as BD-RE or DVD-RAM).

Also, it is possible to implement the present invention when the recording medium is, besides an optical disk, for example, a removable medium (semiconductor memory card) such as an SD memory card.

When a semiconductor memory card is used instead of the BD-ROM, it is only necessary to employ the structure in which data stored in the semiconductor memory card is transferred to the track buffer 2, the heap memory, the dynamic scenario memory 12, and the static scenario memory 11 via an interface (memory card I/F) for reading the data recorded in the semiconductor memory card.

More specifically, when the semiconductor memory card is inserted into a slot (not shown) included in the playback apparatus 200, the playback apparatus 200 and the semiconductor memory card are electrically connected to each other via the memory card I/F. It is only necessary to employ the structure in which the data recorded in the semiconductor memory card is transferred to the track buffer 2, the heap memory, the dynamic scenario memory 12, and the static scenario memory 11 via the memory card I/F.

The following describes the mechanism of copyright protection of data recorded in a BD-ROM. From a standpoint, for example, of improving the confidentiality of data and copyright protection, there are cases in which portions of the data recorded on the BD-ROM are encoded as necessary.

For example, the encoded data of the data recorded on the BD-ROM may be, for example, data corresponding to a video stream, data corresponding to an audio stream, or data corresponding to a stream that includes both video and audio.

The following describes deciphering of encoded data that is among the data recorded on the BD-ROM.

In the playback apparatus, data corresponding to a key necessary for deciphering encoded data on the BD-ROM (for example, a device key) is recorded in the playback apparatus in advance.

Meanwhile, data corresponding to the key necessary for deciphering encoded data (for example, an MKB (media key block) corresponding to the device key) and data in which the key itself, for deciphering the encoded data, is encoded (for example an encoded title key corresponding to the device key and the MKB), is recorded on the BD-ROM. Here, the device key, the MKB, and the encoded title key correspond to each other, and furthermore correspond to an identifier (for example, a volume ID) written in an area that cannot be normally copied on the BD-ROM (an area called BCA). If this composition is not correct, the code cannot be deciphered. Only if the composition is correct, the key necessary for deciphering the code (for example, a decoded title key obtained by decoding the encoded title key based on the device key, the MKB and volume key, can be elicited, and with use of the key necessary for the encoding, the encoded data can be deciphered.

When the inserted BD-ROM is played back in the playback apparatus, encoded data cannot be played back unless the BD-ROM includes a device key that is paired with a title key or MKB (or corresponds to a title key or MKB). The reason is that the key necessary for deciphering the encoded data (the title key) is itself encoded when recorded on the BD-ROM (as an encoded title key), and if the composition of the MKB and the device key is not correct, the key necessary for deciphering the code cannot be elicited.

On the other hand, the playback apparatus is configured so that, if the composition of the encoded title key, MKB, device key, and volume ID is correct, the video stream is decoded, for example with use of the key necessary for deciphering the code (the decoded title key obtained by decoding the encoded title key based on the device key, the MKB and the volume ID), and the audio stream is decoded by the audio decoder.

Although in the present embodiments, a BD-ROM is described as an example of a recording medium, the recording medium is not limited to being a BD-ROM, and the present invention can be implemented even when using, for example, a readable/writable semiconductor memory (for example, a semiconductor memory card having a nonvolatile property such as an SD card).

For example, the playback apparatus may be configured to record data corresponding to data recorded on the BD-ROM on a memory card with use of digital distribution, and to play back the data from the semiconductor memory card. When distributing the necessary data with use of digital distribution and recording the distributed data, it is preferable to distribute the data after having performed partial or entire decoding of the distributed data as necessary, and leaving data that is necessary for the semiconductor memory card in an encoded state.

The following describes operation using, for example, digital distribution, for recording data (distributed data) corresponding to the data described in the above embodiments on the semiconductor memory.

The operations described above may be configured to be performed by the playback apparatus described in the embodiments, or by a terminal apparatus dedicated to recording distributed data on a semiconductor memory that is separate from the playback apparatus in the embodiments. Here, an example of the playback apparatus performing the operations is described. Also, an SD card is described as an example of the recording destination.

When recording distributed data to the SD memory card inserted in the slot of the playback apparatus, first, transmission is requested of the distributed data to a distribution server (not illustrated) that accumulates the distributed data. The playback apparatus reads, from the SD memory card, information for uniquely identifying the SD memory card that is inserted at the playback apparatus at this time (for example, a specific identification number assigned individually to the particular SD memory card, more specifically, a serial number of the SD memory card, etc.), and transmits the read identification information to the distribution server along with the distribution request.

This identification information for uniquely identifying the SD memory card corresponds to, for example, the above-described volume 1D.

Meanwhile, in the distribution server, decoding is performed so that necessary data among the data that is distributed (video streams, audio streams, etc.) can be deciphered with use of the key that is necessary for deciphering the code (for example, the title key), and the necessary data is stored in the server.

For example, a private key is stored in the distribution server, and the distribution server is configured so that different public keys are dynamically created to correspond respectively to the semiconductor memory card-specific identification numbers.

Also, the distribution server is configured so that encoding is possible towards the key that is necessary for deciphering the encoded data itself (the title key) (in other words, configured so that an encoded title key can be generated).

The generated public key information includes information corresponding to the above-described MKB, volume ID, and encoded title key. If the composition of, for example, the semiconductor memory card-specific identification number, the actual public key included in the public key information described later, and the device key recorded in advance in the recording apparatus, is correct, the key necessary for deciphering the code (for example, the title key obtained by decoding the encoded title key based on, for example, the device key, the MKB, and the semiconductor memory card-specific identification number) is acquired, and with use of this acquired key (title key) necessary for deciphering the code, decoding of the encoded data can be performed.

Next, the playback apparatus records the received public key information and distributed data in the recording area of the semiconductor memory card inserted in the slot.

Next, the following describes an exemplary method for decoding and playing back encoded data, from among the data included in the public key information recorded in the recording area of the semiconductor memory card and the data included in the distribution data.

The received public key information is, for example, recorded on a device list indicating the public key itself (for example, the MKB and the encoded title key), signature information, the semiconductor memory card-specific identification number, and information pertaining to a device to be invalidated.

The signature information includes, for example, hash values of the public key information.

In the device list, information is recorded pertaining to, for example, an apparatus that is possibly performing unauthorized playback. This is for example a device key, an identification number of the playback apparatus, or an identification number of a decoder in the playback apparatus recorded in advance on the playback apparatus, information for uniquely specifying the device, a part included in the apparatus, or a function (program) of the apparatus possibly performing unauthorized playback.

The following description pertains to playback of encoded data from among the distribution data recorded in the recording area of the semiconductor memory card.

First, a check is performed pertaining to whether the encoded key itself may be operated before decoding the encoded data with use of the public key itself.

Specifically, the following checks are performed:
(1) whether there is a match between the semiconductor memory identification information included in the public key information and the specific identification number stored in advance on the semiconductor memory card,
(2) whether there is a match between a hash value of the public key information calculated in the playback apparatus, and a hash value included in the signature information, and
(3) whether, based on information indicated in the device list included in the public key information, the playback apparatus performing playback is possibly performing unauthorized playback (for example, by checking whether the device key included in the device list matches the device key stored in the playback apparatus in advance). These checks may be performed in any order.

Control is performed so that the playback apparatus does not decode the encoded data if any of the following is satisfied, in the above-described checks 1 to 3: i) the semiconductor memory-specific identification information included in the public key information does not match the specific identification number stored in advance on the semiconductor memory card, ii) the hash value of the public key information calculated in the playback apparatus does not match the hash value included in the signature information, or iii) a judgment is made that the playback apparatus performing the playback is possibly performing unauthorized playback.

Also, a judgment is made that the composition of the semiconductor memory-specific identification number, the public key included in the public key information, and the device key recorded in advance in the playback apparatus, is correct if i) the semiconductor memory card-specific identification information included in the public key information matches the specific identification number saved on the semiconductor memory card in advance, (ii), the hash value of the public key information calculated in the playback apparatus matches the hash value included in the signature information, and (iii) a judgment is made that the playback apparatus is not possibly performing unauthorized playback. When the composition is judged to be correct, the encoded data is deciphered with use of the key necessary for deciphering the code (based on a device key, the MKB and the semiconductor memory-specific identification number).

For example, when the encoded data is a video stream and an audio stream, the video decoder decodes (decodes) the video stream with use of the key necessary for deciphering the code (the title key obtained by decoding the encoded title key), and the audio decoder decodes (decodes) the audio stream with use of the key necessary for deciphering the code.

According to this type of structure, for any playback apparatus, parts, function (program), etc. that is possibly performing unauthorized use at the time of electronic distribution, information for the identification of such is provided to the device list, and if distribution is attempted, since playback decoding with use of public key information (the public key) can be suppressed on the playback apparatus side if information is included that is indicated in the device list, even if the composition of the semiconductor memory-specific identification number, the public key included in the public key information, and the device key recorded in the playback apparatus in advance, is correct, since control can be performed so that the deciphering of the encoded data is not performed, use of distributed data on an unauthorized device can be suppressed.

Also, it is preferable to use a structure in which the semiconductor memory card-specific identifier recorded in advance on the semiconductor memory card is stored in a highly confidential recording area. The reason is that when the specific number recorded on the semiconductor memory card (for example, in the example of an SD memory card, the SD memory card serial number, etc.) has been altered, illegal copying is facilitated. The reason is that different specific identification numbers are allocated to different semiconductor memory cards, but if the specific identification numbers are altered to be the same, the judgment in (1) becomes meaningless, and there is a possibility of illegal copying, corresponding to the number that was altered, being performed.

Accordingly, it is preferable for the information that is the semiconductor memory card-specific identification number to be recorded in a high-confidentiality recording area.

To realize this type of structure, for example by providing a recording area (called a second recording area) that is separate from the recording area (called a first recording area) that stores normal data as recording areas for recording high-confidentiality data that is semiconductor memory card-specific identifiers), and providing a control circuit for accessing the recording area, access to the second recording area can be made only via the control circuit.

For example, the data recorded in the second recording area has been encoded and recorded. For example, a circuit for decoding the encoded data is built into the control circuit. When there is access of the data in the second recording area via the control circuit, the structure need merely be such that the code is decoding and the decoded data is returned. Also, if the control circuit stores information of a storage location of data recorded in the second recording area, and there is a request to access the data, the corresponding storage location of the data need merely be specified, and the data read from the specified storage location be returned.

Upon issuing an access request to the data recorded in the second recording area to the control circuit via the memory card I/F (for example, semiconductor memory-specific identification number), applications that operate in the playback apparatus that request recording to the semiconductor memory card with use of digital distribution, the control circuit that received the request reads the data recorded in the second recording area and returns the data to the application operating in the playback apparatus. Along with the semiconductor memory card-specific identification number, the distribution request for the necessary data need only be requested from the distribution server, and the public key information sent from the distribution server and the corresponding request for distribution of the data, may be recorded to the first recording area.

Also, an application operating in the playback apparatus, that requests recording on the semiconductor memory card with use of digital distribution, before issuing the request to the control circuit via the memory card I/F to access the data recorded on the second recording area (for example, the semiconductor memory card-specific identification numbers), preferably checks in advance whether the application has been altered. For example, a digital certificate compliant with preexisting X.509 specifications may be used in the check for alteration.

Also, access to the distribution data recorded in the first recording area of the semiconductor memory card need not necessarily be access via a control circuit on the semiconductor memory card.

### <Implementation as Program>

The application program described in the embodiments can be made as described below. Firstly, the software developer, with use of a programming language, writes a source program to realize the content of the flow charts and the functional structural elements. When writing the source program that embodies the content of the flow charts and the functional structural elements, the software developer uses the class structures, variables, array variables, and external function calls to write the program in accordance with the syntax of the programming language.

The written source programs are given as files to a compiler. The compiler translates the source programs and creates an object program.

The translation by the compiler is made up of the processes of syntax analysis, optimization, resource allocation, and code generation. Syntax analysis involves performing lexical analysis and semantic analysis of the source programs, and converting the source programs to an intermediary program. Optimization involves performing operations to divide the intermediary program into basic blocks, analyze the control flow of the intermediary program, and analyze the data flow of the intermediary program. In resource allocation, to improve suitability with a command set of a targeted processor, variables in the intermediary program are allocated to a register or a memory in a targeted processor. Code generation is performed by converting the intermediary commands in the intermediary program into program code, and obtaining an object program.

The object program generated here is made up of one or more program codes for executing, on a computer, the steps of the flow charts and the various processes carried out by the functional structural elements in the embodiments. Here, program code may be any of various types such as native code of a processor or JAVA byte code. There are various formats for realization of the steps by the program code. If it is possible to use external functions to realize the steps, call texts that call such functions become program code. Also, there are cases in which a program code for realizing one step is attributed to separate object programs. In a RISC processor in which command types are limited, the steps of the flow charts may be realized by compositing calculation operation commands, logical calculation commands, branch instruction commands, etc.

When the object programs have been created, the programmer starts up a linker. The linker allocates the object programs and library programs to memory spaces, composites the object programs and library programs into one, and generates a load module. The load module generated thus is anticipated to be read by a computer, and causes the computer to execute the processing procedures and functional structural components shown in the flow charts. The programs may be provided to users by being recorded on a recording medium that is readable by a computer.

### <Singular Implementation of LSI>

The system LSI is obtained by implementing a bare chip on a high-density substrate and packaging them. The system LSI is also obtained by implementing a plurality of bare chips on a high-density substrate and packaging them, so that the plurality of bare chips have an outer appearance of one LSI (such a system LSI is called a multi-chip module).

The system LSI has a QFP (Quad Planar view Package) type and a PGA (Pin Grid Array) type. In the QFP-type system LSI, pins are attached to the four sides of the package. In the PGA-type system LSI, a lot of pins are attached to the entire bottom.

These pins function as an interface with other circuits. The system LSI, which is connected with other circuits through such pins as an interface, plays a role as the core of the playback apparatus 101.

Such a system LSI can be embedded into various types of devices that can play back images, such as a television, game machine, personal computer, one-segment mobile phone, as well as into the playback apparatus 102. The system LSI thus greatly broadens the use of the present invention.

When an elementary buffer, video decoder, audio decoder, and graphics decoder are integrated into a system LSI, it is desirable that the system LSI conforms to the Uniphier architecture.

A system LSI conforming to the Uniphier architecture includes the following circuit blocks.

### Data Parallel Processor (DPP)

The DPP is an SIMD-type processor where a plurality of elemental processors perform a same operation. The DPP achieves a parallel decoding of a plurality of pixels constituting a picture by causing operating units, respectively embedded in the elemental processors, to operate simultaneously by one instruction.

### Instruction Parallel Processor (IPP)

The IPP includes: a local memory controller that is composed of an instruction RAM, an instruction cache, a data RAM, and a data cache; a processing unit that is composed of an instruction fetch unit, a decoder, an execution unit, and a register file; and a virtual multi processing unit that causes the processing unit to execute parallel execution of a plurality of applications.

### MPU Block

The MPU block is composed of: peripheral circuits such as ARM cores, an external bus interface (Bus Control Unit: BCU), a DMA controller, a timer, a vector interrupt controller; and a peripheral interface such as a UART, a GPIO (General Purpose Input Output), and a sync serial interface.

### Stream I/O Block

The stream I/O block performs data input/output with the drive device, a hard disk drive device, and an SD memory card drive device which are connected onto the external busses via the USB interface and the ATA packet interface.

### AV I/O Block

The AV I/O block, which is composed of an audio input/output, a video input/output, and an OSD controller, performs data input/output with the television and the AV amplifier.

### Memory Control Block

The memory control block performs reading and writing from/to the SD-RAM connected therewith via the external buses. The memory control block is composed of an internal bus connection unit for controlling internal connection between blocks, an access control unit for transferring data with the SD-RAM connected to outside of the system LSI, and an access schedule unit for adjusting requests from the blocks to access the SD-RAM.

The following describes a detailed production procedure. Firstly, a circuit diagram of a part to be the system LSI is drawn, based on the drawings that show structures of the embodiments. And then, the constituent elements of the target structure are realized using circuit elements, ICs, or LSIs.

As the constituent elements are realized, buses connecting between the circuit elements, ICs, or LSIs, peripheral circuits, interfaces with external entities and the like are defined. Further, the connection lines, power lines, ground lines, clock signals, and the like are defined. For these definitions, the operation timings of the constituent elements are adjusted by taking into consideration the LSI specifications, and bandwidths necessary for the constituent elements are reserved. With other necessary adjustments, the circuit diagram is completed.

After the circuit diagram is completed, the implementation design is performed. The implementation design is a work for creating a board layout by determining how to arrange the parts (circuit elements, ICs, and LSIs) of the circuit and the connection lines onto the board.

After the implementation design is performed and the board layout is created, the results of the implementation design are converted into CAM data, and the CAM data is output to equipment such as an NC (Numerical Control) machine tool. The NC machine tool performs the SoC implementation or the SiP implementation. The SoC (System on Chip) implementation is a technology for printing a plurality of circuits onto a chip. The SiP (System in Package) implementation is a technology for packaging a plurality of circuits by resin or the like. Through these processes, a system LSI of the present invention can be produced based on the internal structure of the playback apparatus 200 described in the above embodiments.

It should be noted here that the integrated circuit generated as described above may be called IC, LSI, ultra LSI, super LSI, or the like, depending on the level of the integration.

It is also possible to achieve the system LSI by using the FPGA. In this case, a lot of logic elements are to be arranged lattice-like, and vertical and horizontal wires are connected based on the input/output compositions described in LUT (Look-Up Table), so that the hardware structure described in each of the embodiments can be realized. The LUT is stored in the SRAM. Since the contents of the SRAM are erased when the power is off, when the FPGA is used, it is necessary to define the Config information so as to write, onto the SRAM, the LUT for realizing the hardware structure described in each of the embodiments.

In the above embodiments, the invention is realized by middleware and hardware corresponding to the system LSI, hardware other than the system LSI, an interface portion corresponding to the middleware, an interface portion to intermediate between the middleware and the system LSI, an interface portion to intermediate between the middleware and the necessary hardware other than the system LSI, and a user interface portion, and when integrating these elements to form the playback apparatus, particular functions are provided by operating the respective elements in tandem.

Appropriately defining the interface corresponding to the middleware and the interface for the middleware and the system LSI enables parallel, independent development of the user interface portion, the middleware portion, and the system LSI portion of the playback apparatus respectively, and enables more efficient development. Note that there are various ways of dividing up the respective interface portions. For example, when the described video decoder 4a, video decoder 4b, audio decoder 7, and composite unit 10 are included on a chip in the system LSI, development of an interface portion between the middleware to control these units and the middleware corresponding to these units is performed when developing the chip. After completion, including the developed middleware and interface portion in a storage unit such as a memory of the playback apparatus, along with integrating the chip into the playback apparatus, enables performing development of the playback apparatus and the chip in parallel, thereby improving development efficiency.

Versatility is improved when the same interface portion is used regardless of the type of developed chip and the middleware pertaining to the developed chip.

Needless to say, the portion structured as a system LSI in the above description is not limited to being structured as an LSI, and may instead be configured with use of a signal processing circuit that includes corresponding functions to those to be included in the system LSI.

### <Positioning of Extent in Volume Region>

When predetermined data is stored in a file and recorded in a recording medium, the predetermined data is treated as an "extent" on a file system. In the recording medium, an address of the extent is managed in the following way.

In a partition space in the volume region, an extent is formed on a plurality of physically consecutive sectors. The partition space is composed of a "region in which a file set descriptor is recorded", a "region in which terminal descriptor is recorded", a "ROOT directryregion", a "BDMV directryregion", a "JAR directryregion", a "BDJO directryregion", a "PLAYLIST directryregion", a "CLIPINF directryregion", and a "STREAM directryregion". The partition space is a region accessed by the file system. The following describes these regions.

The "file set descriptor" includes a logical block number (LBN) indicating a sector that stores therein file entries of ROOT directory. The "terminal descriptor" indicates a termination of the file set descriptor.

Next, the details of the directory region are described. Each of the plurality of directory areas as described above has the common internal structure. In other words, each directory area has a "file entry", a "directory file", and a "file recording area of a subordinate file".

The "file entry" includes a "descriptor tag", an "ICB tag", and an "allocation descriptor".

The "descriptor tag" indicates that the area is for the file entry.

The "ICB tag" indicates attribute information of the file entry.

The "allocation descriptor" includes an LBN indicating a recording point of the directory file. This completes the description of the file entry. Next, the directory file is described in detail.

The "directory file" includes a file identification descriptor of the subordinate directory, and a file identification descriptor of the subordinate file.

The "file identification descriptor of the subordinate directory" is reference information for accessing the subordinate directory. This file identification descriptor includes identification information of the subordinate directory, a length of a directory name of the subordinate directory, a file entry address indicating a logical block number in which the file entry of the subordinate directory is recorded, and a directory name of the subordinate directory.

The "file identification descriptor of the subordinate file" is reference information for accessing the subordinate file that is subordinate to the directory indicating the directory area. This file identification descriptor includes identification information identifying the subordinate file, a length of a file name of the subordinate file, the file entry address indicating a logical block number in which the file entry of the subordinate directory is recorded, and the file name of the subordinate file.

A file identification descriptor of each of directory files of these directories indicates a logical block in which a file entry of a subordinate directory and a subordinate file is recorded. Accordingly, by using the file identification descriptor, it is possible to reach a file entry of the BDMV directory from the file entry of the ROOT directory. Also, it is possible to reach a file entry of the PLAYLIST directory from the file entry of the BDMV directory. Similarly, it is possible to reach a file entry of each of the JAR directory, the BDJO directory, the CLIPINF directory, and the STREAM directory.

The "file recording region of subordinate file" is a region in which an entity of a subordinate file under a directory is recorded, and also a "file entry" and one or more "extent" of the subordinate file are recorded.

The "file entry" includes a "descriptor tag", an "ICB tag", and an "allocation descriptor".

The "descriptor tag" is a tag indicating a file entry. The descriptor tag is a file entry descriptor, a space bitmap descriptor, and the like. In the case where the descriptor tag indicates a file entry, the number "261" indicating a file entry is written as a descriptor tag.

The "ICB tag" indicates attribute information of the file entry.

The "allocation descriptor" includes a logical block number (LBN) indicating a recording position of an extent that constitutes a subordinate file under a directory. The allocation descriptor includes data indicating an extent length and a logical block number indicating a recording position of an extent. Higher two bits of data set to "0" which indicates an extent length indicates an extent that has been allocated and recorded. The higher two bits of data set to "1" indicates an extent that has been allocated and has not been recorded. The higher two bits of data set to "0" indicates an extent that continues from an allocation identifier. In the case where a subordinate file under a directory is divided into a plurality of extents, the file entry has a plurality of allocation descriptors for each extent.

By referring to an allocation descriptor of a file entry as described above, it is possible to obtain an address of an extent that constitutes a Play List information file, a clip information file, an AV clip file, a BD-J object file, and a JAR archive file.

A file in which a stream, data, and a flag, which are the main points of the present application, corresponds to a file recording region in a directryregion of a directory to which the file belongs. It is possible to access the file by tracing a file identifier of a directory file and an allocation identifier of a file entry.

### <File Opening>

The following describes processing performed for loading a file recorded in a recording medium onto a device.

The AV stream, the Index.bdmv, the JAR file, and a BD-J object as described above are recorded in the BD-ROM in accordance with the file structure and the directory structure. The playback apparatus can read these data to the memory by performing system call for file opening.

The file opening is composed of a series of the following processes. Firstly, a file name to be detected is given to the playback apparatus by a system call, and the directory is searched for using the file name. Then, if a file having the file name is found, an FCB (File Control Block) is reserved and the file handle number is returned. The FCB is generated by copying data of a directory entry of a target file to a memory.

### <Application to Real-time Recording>

The descriptions have been based on the assumption that the AV clip and the PlayList information are recorded in the BD-ROM using the prerecording technique of the authoring system, and are supplied to users. Alternatively, the AV clip and the PlayList information may be recorded in a BD-RE, a BD-R, a hard disk, or a semiconductor memory card via real-time recording, and supplied to users.

In this case, the AV clip may be a transport stream obtained by the recording device performing real-time recording on an analog input signal. Alternatively, the AV clip may be a transport stream obtained by the recording device partilizing a transport stream that has been digitally input.

The recording device performing real-time recording includes: a video encoder operable to encode a video signal to obtain a video stream; an audio encoder operable to encode an audio signal to obtain an audio stream; a multiplexer operable to multiplex a video stream, an audio stream, and the like to obtain a digital stream in MPEG2-TS format; and a source packetizer operable to convert a TS packet constituting the digital stream in MPEG2-TS format into a source packet, and the recording device stores the MPEG2 digital stream converted into source packet format in the AV clip file, and writes the AV clip file into the BD-RE, the BD-R, or the like.

While writing the digital stream, the control unit of the recording device performs processing of generating clip information and PlayList information on the memory. Specifically, when a user requests for recording processing, the control unit generates an AV clip file and clip information file on the BD-RE, the BD-R, or the like.

Then, if a starting position of a GOP of a video stream is detected from a transport stream input by an external device, or if a GOP of a video stream is generated by an encoder, the control unit of the recording device acquires a PTS of an intra picture positioned at a head of the GOP and a packet number of a source packet in which the head part of the GOP is stored. Then, the control unit additionally writes a pair of the PTS and the packet number into the entry map of the clip information file, as a pair of EP_PTS entry and EP_SPN entry. Then, each time a GOP is generated, the control unit additionally writes a pair of EP_PTS entry and EP_SPN entry into the entry map of the clip information file. At this time, if the head of the GOP is an IDR picture, the control unit adds an is_angle_change flag that is set to "ON" to the pair of the EP_PTS entry and the EP_SPN entry. If the head of the GOP is not an IDR picture, the control unit adds the is_angle_change flag that is set to "OFF" to the pair of the EP_PTS entry and the EP_SPN entry.

Also, the control unit sets attribute information of a stream stored in the clip information file in accordance with an attribute of a stream to be recorded. In this way, when an AV clip and clip information are generated and written into a BD-RE and a BD-R, the control unit generates PlayList information defining a playback path via an entry map of the clip information, and writes the generated PlayList information into a BD-RE and a BD-R. By performing these processing using the real-time recording technique, it is possible to realize a hierarchical structure including an AV clip, clip information, and PlayList information in this order on the BD-RE, the BD-R, or the like.

### <Implementation as Recording Device that Realizes Managed Copy>

The playback apparatus according to the first to third embodiments may further have a function of writing a digital stream recorded on the BD-ROM disc 101 into another recording medium by performing managed copy.

The managed copy is a technique for permitting copy of a digital stream, playlist information, a clip information file, and an application program from a read-only recording medium such as a BD-ROM disc to a readable/writable recording medium only in the case where authentication with the server via communication succeeds. Here, the readable/writable recording medium may be a writable optical disc (a BD-R, a BD-RE, a DVD-R, a DVD-RW, and a DVD-RAM, and the like), a hard disc, and a removable medium (an SD memory card, a Memory Stick^{™}, a Compact Flash^{™}, a Smart Media^{™}, and a Multimedia Card^{™}, and the like). By using the managed copy technique, it is possible to limit the number of backup of data recorded on a read-only recording medium, and perform control such that backup is permitted only under a condition that a fee id paid.

If managed copy is performed from a BD-ROM disc to a BD-R disc or a BD-RE disc having the same recording capacity as the BD-ROM disc, the managed copy is realized by copying bit streams recorded on the BD-ROM disc in the order from the innermost track to the outermost track of the BD-ROM disc.

If managed copy is performed between different types of recording media, trans code needs to be performed. Here, the "trans code" is processing for adjusting a digital stream recorded on a BD-ROM disc that is a copy origination to an application format of a recording medium that is a copy destination. For example, the trans code includes processing of converting an MPEG2 transport stream format into an MPEG2 program stream format or the like and processing of reducing a bit rate of each of a video stream and an audio stream and re-encoding the video stream and the audio stream. In order to perform the trans code, it is necessary to obtain an AVClip, Clip information, and PlayList information by performing the above described real-time recording technique.

### <Recording Device Used in Manufacturing on Demand Service or Electric Sell Through Service (MODEST)>

If the playback apparatus 200 has a function of receiving the BD-J object from an on-demand manufacture service or an electrical sell-through services (MODEST), the playback apparatus 200 writes the BD-J object as follows. That is, when the playback apparatus 200 receives the BD-J object from an on-demand manufacture service or an electrical sell-through services (MODEST), the playback apparatus 200 creates a default directory and a MODEST directory under the root directory in the removable medium, and creates the BDMV directory under the MODEST directory. The MODEST directory is a first MODEST directory. The first MODEST directory is created when the user receives the service for the first time. When the user receives the service for the second time onwards, the control unit in the playback apparatus 200 creates a MODEST directory corresponding to a service from the second time onwards.

As described in the above, acquiring the BD-J object in which the GUI management table is written, the control unit writes a start-up program in the default directory, and writes the BD-J object in the BDMV directory under the MODEST directory. This start-up program is a program to be executed first when the recording medium is mounted on the playback apparatus 200. The start-up program causes the playback apparatus 200: to display a menu from which user operation of selecting the BDMV directory is received, and to execute a root change function. This root change function is a function of causing the MODEST directory to which the BDMV directory belongs to be recognized as the root directory when the user performs the selection operation on the menu. The root change function makes it possible to execute the playback control based on the acquired BD-J object by the same control procedures as the control procedures for playing back the BD-ROM.

### <How to Describe Data Structure>

In the above embodiments, the data structure includes a repeated structure "There are a plurality of pieces of information having a predetermined type." that can be defined by describing an initial value of a control variable and a cyclic condition in a for sentence.

Also, an arbitrary data structure "If a predetermined condition is satisfied, predetermined information is defined." can be defined by describing, in an if sentence, the condition to be satisfied and a variable to be set at the time when the condition is satisfied. In this way, the data structure described in each of the embodiments can be described using a high level programming language. Accordingly, the data structure is converted into a computer readable code via the translation process performed by a compiler, which includes syntax analysis, optimization, resource allocation, and code generation, and the data structure converted into the readable code is recorded on the recording medium. By describing in the high level programming language, the data structure is treated as a part other than the method of the class structure in an object-oriented language, specifically, as an array type member variable of the class structure, and constitutes a part of the program. In other words, the data structure described in each of the above embodiments is converted into a computer code and recorded in a recording medium, and is used as a member variable of a program. Accordingly, the data structure is substantially equivalent to a program. Therefore, the data structure needs to be protected as a computer invention.

### <Positioning of Playlist File and Clip Information File in Program>

A program in an executable format for performing playback processing of an AV stream file in accordance with a playlist file is loaded from a recording medium to a memory element of a computer. Then, the program is executed by the computer. Here, the program is composed of a plurality of sections in the memory element. The sections include a text section, a data section, a bss section, and a stack section.

The text section is composed of a code array of the program, an initial value, and unrewritable data.

The data section is composed of an initial value and data that might be rewritten in execution of the program. A file accessed at any time is recorded on the data section of the recording medium.

The bss section includes data having no initial value. Here, the data included in the bss section is referenced by the program included in the text section. Accordingly, an area for storing the bss section needs to be prepared in the RAM determined by performing compile processing or link processing.

The stack section is a memory area temporarily given to the program as necessary. A local variable temporarily used in processing shown in each of the flow chart is recorded on the stack section.

Note that when the program is initialized, an initial value is set for the bss section, and a necessary area is prepared for the stack section.

The playlist file and the clip information file are each converted into a computer readable code and recorded on a recording medium, as described above. In other words, the playlist file and the clip information file are each managed as "unrewritable data" in the above text section or "data to be recorded on a file and accessed at any time" in the above data section at a time of execution of the program. The playlist file and the clip information file described in the above first to third embodiments are each to be a compositional element of the program at a time of execution of the program. On the other hand, the playlist file and the clip information file each do not amount to just presentation of data.

### [Industrial Applicability]

The present invention is applicable to a playback apparatus that performs stereoscopic viewing of video contents, and is particularly effective in a playback apparatus that performs stereoscopic viewing by performing plane shift.

### [Reference Signs List]

100: BD-ROM
200: playback apparatus
300: remote controller
400: TV
500: liquid crustal glasses
1: BD-ROM drive
2: track buffer
3: demultiplexer
4a and 4b: video decoder
4c: video plane
5a and 5b: presentation graphics (PG) decoder
5c and 5d: presentation graphics (PG) memory
5f: presentation graphics (PG) plane
6a: still image memory
6b: still image decoder
6c: background plane
7: audio decoder
8: interactive graphics (IG) plane
9a and 9b: plane shift engine
10: composition unit
11: static scenario memory
12: dynamic scenario memory
13: control unit
14: HDMV module
15: BD-J module
16: mode management module
17: dispatcher
18: AV playback library
19: application data association module
21: UO detection module
22a and 22b: rendering engine
23: network interface
24: local storage
25: virtual file system
27: removable medium
28: image shit amount register
29: dimension judgment unit
30: dimension mode storage unit
31: light left processing storage unit
32: HDMI transmission/reception unit

## Claims

1. A playback apparatus for performing stereoscopic playback by alternately performing playback for left view and playback for right view, the playback apparatus comprising:
a plane memory that stores therein image data composed of a predetermined number of horizontal pixel data pieces and a predetermined number of vertical pixel data pieces;
a shift engine operable to, during the playback for the left view, perform shift processing for a left eye on the image data stored in the plane memory to obtain an image for the left eye that is shifted in one of a left direction and a right direction, and during the playback for the right view, perform shift processing for a right eye on the image data stored in the plane memory to obtain an image for the right eye that is shifted in a direction opposite to the one direction; and
a rendering engine operable to, for each of the images for the left eye and the right eye, perform rendering processing of rendering a substitute image part on a rectangle region at an end portion of the image, the substitute image part being generated using substitute non-transparent pixel data pieces, the end portion being in a direction opposite to the direction in which the image has been shifted.

2. The playback apparatus of Claim 1, wherein
the rectangle region is composed of a number of horizontal pixel data pieces corresponding to an amount of the shift and a number of vertical pixel data pieces equal to the predetermined number of horizontal pixel data pieces.

3. The playback apparatus of Claim 2, wherein
the substitute image part is generated using a part of the pixel data pieces that constitute the image data.

4. The playback apparatus of Claim 3, wherein
the part of the pixel data pieces corresponds to pixel data pieces of one of the rectangle regions respectively at the end portions in the left direction and the right direction.

5. The playback apparatus of Claim 3, wherein
the part of the pixel data pieces corresponds to pixel data pieces of a rectangle region adjacent to any one of the rectangle regions.

6. The playback apparatus of Claim 3, playing back a recording medium, wherein
the part of the pixel data pieces corresponds to pixel data pieces of a rectangle region specified by an application read from the recording medium.

7. The playback apparatus of Claim 2, wherein
the substitute image part is generated using pixel data pieces defining a predetermined color.

8. The playback apparatus of Claim 7, further comprising
a user input reception unit operable to receive, based on a user's operation, color information indicating a color to be used for performing the rendering processing, wherein
the predetermined color is indicated by the color information received by the user input reception unit.

9. The playback apparatus of Claim 7, playing back a recording medium, wherein
the predetermined color is specified by an application read from the recording medium.

10. The playback apparatus of Claim 7, further comprising
a calculation unit operable to calculate color information indicating a color of the image data, based on at least one of pieces information respectively indicating luminance, color phase, brightness, and chroma of the image data, wherein
the predetermined color is indicated by the color information calculated by the calculation unit.

11. The playback apparatus of Claim 2, further comprising
a storage unit that stores beforehand therein supplementary image data composed of a predetermined number of vertical pixel data pieces and a predetermined number of horizontal pixel data pieces, wherein
the substitute image part is generated using the supplementary image data.

12. The playback apparatus of Claim 2, playing back a recording medium, further comprising
a storage unit that stores beforehand therein supplementary image data composed of a predetermined number of vertical pixel data pieces and a predetermined number of horizontal pixel data pieces, wherein
the substitute image part is generated using the supplementary image data specified by an application read from the recording medium.

13. The playback apparatus of Claim 1, further comprising:
a video plane that stores therein video frames;
a graphics plane that stores therein graphics data; and
a composition unit operable to composite data pieces respectively stored in the plane memory, the video plane, and the graphics plane in this order.

14. A playback method for use in a playback apparatus for performing stereoscopic playback by alternately performing playback for left view and playback for right view, the playback apparatus comprising:
a plane memory that stores therein image data composed of a predetermined number of horizontal pixel data pieces and a predetermined number of vertical pixel data pieces;
the playback method comprising:
a shift step of, during the playback for the left view, performing shift processing for a left eye on the image data stored in the plane memory to obtain an image for the left eye that is shifted in one of a left direction and a right direction, and during the playback for the right view, performing shift processing for a right eye on the image data stored in the plane memory to obtain an image for the right eye that is shifted in a direction opposite to the one direction; and
a rendering step of, for each of the images for the left eye and the right eye, performing rendering processing of rendering a substitute image part on a rectangle region at an end portion of the image, the substitute image part being generated using substitute non-transparent pixel data pieces, the end portion being in a direction opposite to the direction in which the image has been shifted.

15. A playback program including procedure for causing a computer to perform playback processing for realizing stereoscopic playback by alternately performing playback for left view and playback for right view, the computer comprising:
a plane memory that stores therein image data composed of a predetermined number of horizontal pixel data pieces and a predetermined number of vertical pixel data pieces;
the playback processing comprising:
a shift procedure of, during the playback for the left view, performing shift processing for a left eye on the image data stored in the plane memory to obtain an image for the left eye that is shifted in one of a left direction and a right direction, and during the playback for the right view, performing shift processing for a right eye on the image data stored in the plane memory to obtain an image for the right eye that is shifted in a direction opposite to the one direction; and
a rendering procedure of, for each of the images for the left eye and the right eye, performing rendering processing of rendering a substitute image part on a rectangle region at an end portion of the image, the substitute image part being generated using substitute non-transparent pixel data pieces, the end portion being in a direction opposite to the direction in which the image has been shifted.
